# EUROPEAN PATENT APPLICATION

(11) **EP 4 838 950 A1**
(43) Date of publication of application: **11.11.2026**
(21) Application number: 24918263.5
(22) Date of filing: 10.12.2024
(51) Int. Cl.: H04W 36/00, H04W 36/08

(54) **COMMUNICATION METHOD AND COMMUNICATION APPARATUS**

(30) Priority: 19.01.2024 CN 202410084724
(71) Applicant: Huawei Technologies Co., Ltd., Shenzhen, Guangdong 518129 (CN)
(72) Inventor: XU, Yishan, Shenzhen, Guangdong 518129 (CN)
(74) Representative: Huawei European IPR
(86) International application number: PCT/CN2024/138077
(87) International publication number: WO 2025/152655

(57) **Abstract**

This application relates to the communications field, and specifically, to a communication method and a communications apparatus. Cell handover enables a terminal to switch from one cell to another cell. However, the cell handover may conflict with another cell change manner, causing the terminal to fail to connect to the target cell. In embodiments of this application, a core network device or an access network device sends second information to a terminal, to indicate a cell used for different handover manners. After determining the handover manner, the terminal may select the second cell based on the second information. If it is determined that the path is switched through the first handover manner, the second cell may be selected from the cells that support the first handover manner. If it is determined that the path is switched through the second handover manner, the second cell may be selected from the cells that support the second handover manner. The terminal selects a cell change manner based on the second information, which can avoid problems caused by conflicts between multiple cell change manners.

## Description

This application claims priority to Chinese Patent Application No. 202410084724.2 filed with the China National Intellectual Property Administration (CNIPA) on January 19, 2024, and entitled "Communication Method and Communication Device." The entire content of this application is incorporated herein by reference.

### TECHNICAL FIELD

This application relates to the field of communications, and specifically to a communication method and a communication device.

### BACKGROUND

A cell can be considered as a wireless signal coverage area that provides identification through a physical cell identifier (physical cell identifier, PCI)) or a cell global identifier (cell global identifier, CGI)). The coverage area of each base station can be divided into one or more cells. A terminal can switch from one cell to another. The cell before the handover can be referred to as a source cell or an anchor (anchor) cell. The cell after the handover can be referred to as a target cell.

Cell handover enables a terminal to switch from a cell with a poor channel state to a cell with a better channel state, thereby providing users with better communication services. In addition to cell handover, the terminal may also establish a connection with the target cell through other cell change methods. However, the target cell in the cell handover may conflict with the target cell in other cell change methods, causing the terminal to fail to connect to the target cell.

### SUMMARY

The embodiments of this application provide a communication method, a communication apparatus, a communication system, a computer-readable storage medium, and a computer program product. These can avoid problems caused by conflicts among various cell change methods.

According to a first aspect, embodiments of this application provide a communication method. An execution body of the method may be a terminal or a chip applied to the terminal. The following uses an example in which the execution body is the terminal for description. The method includes: receiving second information through a first path, where the second information includes a first set and/or a second set, the first set indicates a cell that supports a first handover manner, and the second set indicates a cell that supports a second handover manner; determining to switch the first path to a second path by using the first handover manner or the second handover manner, where the second path includes a connection between the terminal and a second cell, and when the first path is switched to the second path by using the first handover manner, the second cell belongs to the cell indicated by the first set, or the second cell does not belong to the cell indicated by the second set; or, when the first path is switched to the second path by using the second handover manner, the second cell belongs to the cell indicated by the second set, or the second cell does not belong to the cell indicated by the first set.

The handover method applicable to different cells may vary. The first set and/or the second set indicate the cells corresponding to different handover methods. After determining the handover method, the terminal may select a second cell based on the second information. If it is determined to switch the path through the first handover method, the terminal may select the second cell from the cells that support the first handover method, or avoid selecting the second cell from the cells that support the second handover method. If it is determined to switch the path through the second handover method, the terminal may select the second cell from the cells that support the second handover method, or avoid selecting the second cell from the cells that support the first handover method. By selecting a cell change method based on the second information, the terminal can avoid problems caused by conflicts among multiple cell change methods.

Optionally, before receiving the second information through the first path, the method further includes: sending first information through the first path, where the first information indicates that the terminal supports multiple handover methods, and the multiple handover methods include the first handover method and the second handover method.

In the embodiments of this application, "the first information indicates that the terminal supports a plurality of handover manners, and the plurality of handover manners include the first handover manner and the second handover manner" may be expressed as follows: The first information indicates that the terminal supports the second handover manner, or the first information indicates that the terminal can perform handover in the second handover manner.

Because a terminal that does not support the second handover manner or does not support a plurality of handover manners may exist in a network, the terminal may send the first information, to indicate that the terminal supports the second handover manner or the plurality of handover manners, so that the network device performs processing related to the second handover manner.

Optionally, before the determining to switch the first path to the second path in the first switching manner or the second switching manner, the method further includes: receiving third information by using the first path, where the third information indicates that the terminal is allowed to perform a plurality of switching manners.

In the embodiments of this application, "the third information indicates that the terminal is allowed to perform a plurality of handover manners" may be expressed as follows: The third information indicates that the terminal is allowed to perform the second handover manner.

The third information is used to respond to the first information, explicitly indicating that the terminal is allowed to perform multiple handover modes. If the terminal receives the third information, it can perform multiple handover modes. If the terminal does not receive the third information, it can switch paths according to the default handover mode (for example, a handover mode based on cell handover). This can prevent issues caused by the handover mode performed by the terminal not being supported by the network device.

Optionally, before receiving the second information through the first path, the method further includes: sending fourth information through the first path, where the fourth information indicates the terminal to enable a mode for performing the second handover mode.

In various embodiments of this application, "enabling a mode for performing the second handover mode" may also be expressed as: performing path switching through the second handover mode, or activating the second handover mode.

In some cases, if the terminal determines that the network device supports multiple handover modes, the terminal may perform the following: The fourth information may indicate the terminal's requirement, so that the network device can configure, through the second information, a set that meets the terminal's requirement.

Optionally, the method further includes: if it is determined to switch the first path to the second path through the second switching manner, adjust the signal quality value of the second cell from the first value to the second value, wherein the first value is greater than or equal to the signal quality value corresponding to the first switching manner, and the second value is less than the signal quality value corresponding to the first switching manner; and send the second value through the first path.

In various embodiments of this application, "the first value is greater than or equal to the signal quality value corresponding to the first switching manner, and the second value is less than the signal quality value corresponding to the first switching manner," can be expressed as: the first value is greater than the signal quality value corresponding to the first switching manner, and the second value is less than or equal to the signal quality value corresponding to the first switching manner.

In some cases, the first switching manner is triggered by a network device. To avoid triggering the first switching manner, the terminal may modify the signal quality value to prevent the network device from triggering the first switching manner. This embodiment method meets the terminal's path switching needs without modifying the triggering mechanism of the first switching manner, thereby improving the compatibility of the method.

Optionally, the method further includes: if it is determined to switch the first path to the second path through the second switching manner, then sending, through the first path, a signal quality value of the second cell, wherein the signal quality value of the second cell is less than the signal quality value corresponding to the first switching manner that triggers the execution.

In some cases, the first switching manner is triggered by a network device. To avoid triggering the first switching manner, the terminal may send, through the first path, a signal quality value of the second cell, or the terminal may send, through the first path, the signal quality value of the second cell without performing signal measurement. Moreover, the signal quality value is less than the signal quality value corresponding to the first switching manner that triggers the execution, so as to avoid the network device from triggering the first switching manner. This implementation manner meets the path switching requirement of the terminal without modifying the triggering mechanism of the first switching manner, thereby improving compatibility of the method.

Optionally, the first switching manner is a switching manner based on cell handover, the second switching manner is a switching manner based on dual connectivity, the first set is a first cell set, the second set is a second cell set, and the first cell set includes a cell corresponding to a public land mobile network (public land mobile network, PLMN) that is equivalent to a PLMN of the first cell, wherein the cell corresponding to the PLMN in the second cell set is not equivalent to the PLMN of the first cell, and the first cell is a cell corresponding to the first path.

The terminal does not need to perform network selection when transferring from the PLMN corresponding to the first cell to a cell corresponding to an equivalent PLMN. However, the terminal needs to perform network selection when transferring from the PLMN corresponding to the first cell to a cell corresponding to a non-equivalent PLMN. Therefore, configuring the first set as a set of cells corresponding to equivalent PLMNs is beneficial for a handover method based on cell handover. Configuring the second set as a set of cells corresponding to non-equivalent PLMNs is beneficial for a handover method based on dual connectivity.

Optionally, the first handover method is a handover method based on cell handover, the second handover method is a handover method based on dual connectivity, the first set is a first PLMN set, the second set is a second PLMN set, the PLMNs in the first PLMN set are equivalent to the PLMN of the first cell, and the PLMNs in the second PLMN set are not equivalent to the PLMN of the first cell. The first cell is a cell corresponding to the first path.

The terminal does not need to perform network selection when transferring from the PLMN corresponding to the first cell to a cell corresponding to an equivalent PLMN. However, the terminal needs to perform network selection when transferring from the PLMN corresponding to the first cell to a cell corresponding to a non-equivalent PLMN. Therefore, configuring the first set as a set of cells corresponding to equivalent PLMNs is beneficial for a handover method based on cell handover. Configuring the second set as a set of cells corresponding to non-equivalent PLMNs is beneficial for a handover method based on dual connectivity.

Optionally, the first handover mode is a cell-based handover mode, the second handover mode is a dual connectivity-based handover mode, the first set is a first cell set, the second set is a second cell set, the PLMN corresponding to the cell in the first cell set is the same as the PLMN of the first cell, and the PLMN corresponding to the cell in the second cell set is different from the PLMN of the first cell. The first cell is a cell corresponding to the first path.

When the terminal switches from a cell corresponding to a PLMN of the first cell to a cell corresponding to the same PLMN, there is no need to perform network selection. However, when the terminal switches from a cell corresponding to a PLMN of the first cell to a cell corresponding to a different PLMN, network selection may need to be performed. Therefore, configuring the first set as a cell set corresponding to the same PLMN is beneficial for the cell-based handover mode. Configuring the second set as a cell set corresponding to a different PLMN is beneficial for the dual connectivity-based handover mode.

Optionally, the first handover mode is a cell-based handover mode, the second handover mode is a dual connectivity-based handover mode, the first set is a first PLMN set, the second set is a second PLMN set, the PLMN in the first PLMN set includes the PLMN of the first cell, and the PLMN in the second PLMN set does not include the PLMN of the first cell. The first cell is a cell corresponding to the first path.

Network selection does not need to be performed when the terminal is handed over from a PLMN corresponding to the first cell to a cell corresponding to a same PLMN, and network selection may need to be performed when the terminal is handed over from a PLMN corresponding to the first cell to cells corresponding to different PLMNs. Configuring the first set as a same PLMN set facilitates a handover manner based on cell handover, and configuring the second set as different PLMN sets facilitates a handover manner based on dual connectivity.

According to a second aspect, an embodiment of this application provides a communication method. An execution body of the method may be an access network device or a chip applied to the access network device. The following uses an example in which the execution body is the access network device for description. The method includes: receiving permission information from a core network device, where the permission information indicates that the terminal is allowed to perform a plurality of handover manners, and the plurality of handover manners include a first handover manner and a second handover manner; or the permission information indicates that the terminal is allowed to perform the second handover manner; and sending second information to the terminal based on the permission information, where the second information includes the first set and/or the second set, the first set indicates a cell that supports the first handover manner, and the second set indicates a cell that supports the second handover manner.

The handover method applicable to different cells may vary. The first set and/or the second set indicate the cells corresponding to different handover methods. After determining the handover method, the terminal may select a second cell based on the second information. If it is determined to switch the path through the first handover method, the terminal may select the second cell from the cells that support the first handover method, or avoid selecting the second cell from the cells that support the second handover method. If it is determined to switch the path through the second handover method, the terminal may select the second cell from the cells that support the second handover method, or avoid selecting the second cell from the cells that support the first handover method. By selecting a cell change method based on the second information, the terminal can avoid issues arising from conflicts between multiple cell change methods.

Optionally, before receiving the permission information from the core network device, the method further includes: receiving first information from the terminal, where the first information indicates that the terminal supports multiple handover methods, and the multiple handover methods include the first handover method and the second handover method; and sending the first information to the core network device.

Since there may be terminals in the network that do not support the second switching mode or do not support multiple switching modes, the terminal may send first information to indicate that it supports the second switching mode or multiple switching modes. This allows the network device to perform processing related to the second switching mode.

Optionally, the method further includes: sending third information to the terminal, where the third information indicates that the terminal is allowed to execute multiple switching modes, and the multiple switching modes include the first switching mode and the second switching mode.

The third information is used to respond to the first information, explicitly indicating that the terminal is allowed to execute multiple switching modes. If the terminal receives the third information, it can execute multiple switching modes. If the terminal does not receive the third information, it can switch paths according to the default switching mode (for example, a switching mode based on cell handover). This can prevent problems caused by the switching mode executed by the terminal not being supported by the network device.

Optionally, before sending the second information to the terminal, the method further includes: receiving fourth information from the terminal, where the fourth information indicates that the terminal has enabled a mode for executing the second switching mode; and sending the second information to the terminal includes: sending the second information to the terminal according to the fourth information.

In some cases, when the terminal determines that the network device supports multiple handover modes, the terminal may indicate its requirements through the fourth information. This allows the network device to configure, through the second information, a set that meets the terminal's requirements.

Optionally, sending second information to the terminal includes: sending the second information to the terminal through a first path, where a cell corresponding to the first path is a first cell; and the permission information includes at least one of the following information: fifth information, indicating that the access network device does not perform the first handover mode; sixth information, indicating that the access network device performs the second handover mode; a first PLMN set, where the PLMN in the first PLMN set is not equivalent to the PLMN of the first cell; and seventh information, indicating that the priority of the first handover mode is lower than the priority of the second handover mode.

In some cases, if the core network device does not want the access network device to perform the first handover mode, the core network device may indicate, through one or more pieces of information in the permission information, that the access network device does not perform the first handover mode. For example, the access network device may perform, according to the permission information, an operation related to the first handover mode for the terminal, or remove a cell in the first set that supports the first handover mode, so that the terminal can avoid performing the first handover mode.

Optionally, the method further includes: sending eighth information to a core network device, where the eighth information indicates that the configuration of the handover mode of the terminal has been updated.

The eighth information is used to respond to the permission information, so that the core network device can determine that the terminal has completed the update of the handover mode configuration.

Optionally, sending second information to the terminal includes: sending the second information to the terminal through a first path, where a cell corresponding to the first path is a first cell; the first handover mode is a handover mode based on cell handover, the second handover mode is a handover mode based on dual connectivity, the first set is a first cell set, the second set is a second cell set, the cell corresponding to the PLMN in the first cell set is equivalent to the PLMN of the first cell, and the cell corresponding to the PLMN in the second cell set is not equivalent to the PLMN of the first cell.

When the terminal switches from a cell corresponding to the PLMN of the first cell to a cell corresponding to an equivalent PLMN, there is no need to perform network selection. When the terminal switches from a cell corresponding to the PLMN of the first cell to a cell corresponding to a non-equivalent PLMN, network selection needs to be performed. Therefore, configuring the first set as a cell set of an equivalent PLMN is beneficial for the handover mode based on cell handover. Configuring the second set as a cell set of a non-equivalent PLMN is beneficial for the handover mode based on dual connectivity.

Optionally, sending second information to the terminal includes: sending the second information to the terminal through a first path, where a cell corresponding to the first path is a first cell; the first handover mode is a handover mode based on cell handover, the second handover mode is a handover mode based on dual connectivity, the first set is a first PLMN set, the second set is a second PLMN set, the PLMN in the first PLMN set is equivalent to the PLMN of the first cell, and the PLMN in the second PLMN set is not equivalent to the PLMN of the first cell.

When the terminal switches from the PLMN corresponding to the first cell to a cell corresponding to an equivalent PLMN, network selection is not required. However, when the terminal switches from the PLMN corresponding to the first cell to a cell corresponding to a non-equivalent PLMN, network selection is required. Therefore, configuring the first set as an equivalent PLMN set is beneficial for the handover mode based on cell handover. Configuring the second set as a non-equivalent PLMN set is beneficial for the handover mode based on dual connectivity.

Optionally, sending second information to the terminal includes: sending the second information to the terminal through a first path, where a cell corresponding to the first path is a first cell; the first handover mode is a handover mode based on cell handover, the second handover mode is a handover mode based on dual connectivity, the first set is a first cell set, the second set is a second cell set, the PLMN corresponding to the cell in the first cell set is the same as the PLMN of the first cell, and the PLMN corresponding to the cell in the second cell set is different from the PLMN of the first cell.

When the terminal switches from the PLMN corresponding to the first cell to a cell corresponding to the same PLMN, there is no need to perform network selection. However, when the terminal switches from the PLMN corresponding to the first cell to a cell corresponding to a different PLMN, network selection may be required. Therefore, configuring the first set as a cell set corresponding to the same PLMN is beneficial for the handover mode based on cell handover. Similarly, configuring the second set as a cell set corresponding to a different PLMN is beneficial for the handover mode based on dual connectivity.

Optionally, sending second information to the terminal includes: sending the second information to the terminal through a first path, where a cell corresponding to the first path is a first cell; the first handover mode is a handover mode based on cell handover, the second handover mode is a handover mode based on dual connectivity, the first set is a first PLMN set, the second set is a second PLMN set, the PLMN in the first PLMN set includes the PLMN of the first cell, and the PLMN in the second PLMN set does not include the PLMN of the first cell.

When the terminal switches from the PLMN corresponding to the first cell to a cell corresponding to the same PLMN, there is no need to perform network selection. However, when the terminal switches from the PLMN corresponding to the first cell to a cell corresponding to a different PLMN, network selection may be required. Therefore, configuring the first set as a same PLMN set is beneficial for the handover mode based on cell handover. Similarly, configuring the second set as a different PLMN set is beneficial for the handover mode based on dual connectivity.

According to a third aspect, an embodiment of this application provides a communication method. An execution body of the method may be an access network device or a chip applied to the access network device. The following uses an example in which the execution body is the access network device for description. The method includes: receiving permission information from a core network device, where the permission information indicates that a terminal is allowed to perform a plurality of handover modes, and the plurality of handover modes include a first handover mode and a second handover mode; or, the permission information indicates that the terminal is allowed to perform the second handover mode; receiving fourth information from the terminal through a first path, where the fourth information indicates that the terminal enables a mode of performing the second handover mode; and determining, based on the permission information and the fourth information, not to enable the mode of performing the first handover mode. Alternatively, the second information is sent to the terminal through the first path; or, the second information is sent to the terminal through the first path, and the second information includes updated information of the second information. The second information includes a first set and/or a second set, the first set indicates a cell that supports the first handover mode, and the second set indicates a cell that supports the second handover mode.

The handover method applicable to different cells may vary. The first set and/or the second set indicate the cells corresponding to different handover methods. After determining the handover method, the terminal may select a second cell based on the second information. If it is determined to switch the path through the first handover method, the terminal may select the second cell from the cells that support the first handover method, or avoid selecting the second cell from the cells that support the second handover method. If it is determined to switch the path through the second handover method, the terminal may select the second cell from the cells that support the second handover method, or avoid selecting the second cell from the cells that support the first handover method. By selecting a cell change method based on the second information, the terminal can avoid issues arising from conflicts between multiple cell change methods.

Optionally, before receiving the permission information from the core network device, the method further includes: receiving first information from the terminal through a first path, where the first information indicates that the terminal supports multiple handover methods, and the multiple handover methods include the first handover method and the second handover method; and sending the first information to the core network device.

Since there may be terminals in the network that do not support the second handover method or do not support multiple handover methods, the terminal may send first information to indicate that it supports the second handover method or multiple handover methods. This allows the network device to perform processing related to the second handover method.

Optionally, the method further includes: sending third information to the terminal through the first path, where the third information indicates that the terminal is allowed to perform multiple handover methods.

The third information is used to respond to the first information, explicitly indicating that the terminal is allowed to perform multiple handover methods. If the terminal receives the third information, it can perform multiple handover methods. If the terminal does not receive the third information, it can switch paths according to the default handover method (for example, a handover method based on cell handover). This can prevent problems caused by the handover method performed by the terminal not being supported by the network device.

Optionally, the permission information includes at least one of the following information: fifth information, indicating that the access network device does not perform the first handover method; sixth information, indicating that the access network device performs the second handover method; a first PLMN set, where the PLMN in the first PLMN set is not equivalent to the PLMN of the first cell, and the first cell is a cell corresponding to the first path; seventh information, indicating that the priority of the first handover method is lower than the priority of the second handover method.

In some cases, the core network device does not want the access network device to perform the first handover mode. In this case, the core network device may indicate, by using one or more pieces of information in the permission information, the access network device not to perform the first handover mode. For example, the access network device may indicate, according to the permission information, the terminal not to perform operations related to the first handover mode, or remove cells in the first set that support the first handover mode, thereby preventing the terminal from performing the first handover mode.

Optionally, the method further includes: sending eighth information to the core network device, where the eighth information indicates that the handover mode configuration of the terminal has been updated.

The eighth information is used to respond to the permission information, so that the core network device can determine that the terminal has completed the update of the handover mode configuration.

Optionally, the first handover mode is a cell-based handover mode, the second handover mode is a dual connectivity-based handover mode, the first set is a first cell set, the second set is a second cell set, the first cell set includes cells corresponding to PLMNs that are equivalent to the PLMN of the first cell, and the second cell set includes cells corresponding to PLMNs that are not equivalent to the PLMN of the first cell, and the first cell is a cell corresponding to the first path.

The terminal does not need to perform network selection when switching from a PLMN corresponding to a first cell to a cell corresponding to an equivalent PLMN. However, the terminal needs to perform network selection when switching from a PLMN corresponding to the first cell to a cell corresponding to a non-equivalent PLMN. Therefore, configuring the first set as a set of cells corresponding to equivalent PLMNs is beneficial for a handover method based on cell handover. Configuring the second set as a set of cells corresponding to non-equivalent PLMNs is beneficial for a handover method based on dual connectivity.

Optionally, the first handover method is a handover method based on cell handover, the second handover method is a handover method based on dual connectivity, the first set is a first PLMN set, the second set is a second PLMN set, the PLMNs in the first PLMN set are equivalent to the PLMN of the first cell, and the PLMNs in the second PLMN set are not equivalent to the PLMN of the first cell. The first cell is a cell corresponding to a first path.

The terminal does not need to perform network selection when switching from a PLMN corresponding to a first cell to a cell corresponding to an equivalent PLMN. However, the terminal needs to perform network selection when switching from a PLMN corresponding to the first cell to a cell corresponding to a non-equivalent PLMN. Therefore, configuring the first set as a set of cells corresponding to equivalent PLMNs is beneficial for a handover method based on cell handover. Configuring the second set as a set of cells corresponding to non-equivalent PLMNs is beneficial for a handover method based on dual connectivity.

Optionally, the first handover mode is a cell-based handover mode, the second handover mode is a dual connectivity-based handover mode, the first set is a first cell set, the second set is a second cell set, the PLMN corresponding to the cell in the first cell set is the same as the PLMN of the first cell, and the PLMN corresponding to the cell in the second cell set is different from the PLMN of the first cell. The first cell is a cell corresponding to the first path.

When the terminal switches from a cell corresponding to a PLMN of the first cell to a cell corresponding to the same PLMN, there is no need to perform network selection. However, when the terminal switches from a cell corresponding to a PLMN of the first cell to a cell corresponding to a different PLMN, network selection may need to be performed. Therefore, configuring the first set as a cell set corresponding to the same PLMN is beneficial for the cell-based handover mode. Configuring the second set as a cell set corresponding to a different PLMN is beneficial for the dual connectivity-based handover mode.

Optionally, the first handover mode is a cell-based handover mode, the second handover mode is a dual connectivity-based handover mode, the first set is a first PLMN set, the second set is a second PLMN set, the PLMN in the first PLMN set includes the PLMN of the first cell, and the PLMN in the second PLMN set does not include the PLMN of the first cell. The first cell is a cell corresponding to the first path.

Network selection does not need to be performed when the terminal is handed over from a PLMN corresponding to the first cell to a cell corresponding to a same PLMN, and network selection may need to be performed when the terminal is handed over from a PLMN corresponding to the first cell to a different PLMN. Therefore, configuring the first set as a same PLMN set facilitates a cell-based handover manner. Configuring the second set as different PLMN sets facilitates a dual connectivity based handover manner.

According to a fourth aspect, an embodiment of this application provides a communication method. An execution body of the method may be a core network device or a chip applied to the core network device. The following uses an example in which the execution body is the core network device for description. The method includes: determining permission information, where the permission information indicates that the terminal is allowed to perform a plurality of handover modes, and the plurality of handover modes include a first handover mode and a second handover mode; or, the permission information indicates that the terminal is allowed to perform the second handover mode; and sending the permission information.

The handover mode applicable to different core network devices may be different. If the core network device supports a new handover mode (for example, the second handover mode), the core network device may indicate that the terminal is allowed to perform a plurality of handover modes or the second handover mode. In this way, a problem caused by incompatibility between the handover mode determined by the terminal and the handover mode supported by the core network device can be avoided, and a problem caused by a conflict between the plurality of cell change modes can also be avoided.

Optionally, before sending the permission information, the method further includes: receiving first information, where the first information indicates that the terminal supports multiple handover modes, and the multiple handover modes include a first handover mode and a second handover mode.

Since there may be terminals in the network that do not support the second handover mode or do not support multiple handover modes, the terminal may send the first information to indicate that it supports the second handover mode or multiple handover modes, so that the network device can perform processing related to the second handover mode.

Optionally, the permission information includes at least one of the following information: fifth information, indicating that the access network device does not perform the first handover mode; sixth information, indicating that the access network device performs the second handover mode; a first PLMN set, where a PLMN in the first PLMN set is not equivalent to a PLMN of the first cell, and the first cell is a cell corresponding to the first path, where the first path includes a connection between the terminal and the access network device; and seventh information, indicating that a priority of the first handover mode is lower than a priority of the second handover mode.

In some cases, the core network device does not want the access network device to perform the first handover mode. In this case, the core network device may indicate, by using one or more pieces of information in the permission information, the access network device not to perform the first handover mode. For example, the access network device may indicate, according to the permission information, the terminal not to perform operations related to the first handover mode, or remove cells in the first set that support the first handover mode, so that the terminal can be prevented from performing the first handover mode.

Optionally, the permission information includes the first set and/or the second set. The first set indicates a PLMN that supports the first handover mode, and the second set indicates a PLMN that supports the second handover mode.

The core network device sends the first set and/or the second set through the permission information, which helps the access network device or the terminal determine cells corresponding to different handover modes.

Optionally, the first handover mode is a handover mode based on cell handover, the second handover mode is a handover mode based on dual connectivity, the first set is a first PLMN set, the second set is a second PLMN set, the PLMN in the first PLMN set is equivalent to the PLMN of the first cell, and the PLMN in the second PLMN set is not equivalent to the PLMN of the first cell, and the first cell is a cell corresponding to the first path, where the first path includes a connection between the terminal and the access network device.

The terminal does not need to perform network selection when switching from a PLMN corresponding to a first cell to a cell corresponding to an equivalent PLMN. However, the terminal may need to perform network selection when switching from a PLMN corresponding to the first cell to a cell corresponding to a non-equivalent PLMN. Therefore, configuring the first set as a set of cells corresponding to the same PLMN is beneficial for a handover method based on cell handover. Configuring the second set as a set of cells corresponding to different PLMNs is beneficial for a handover method based on dual connectivity.

Optionally, the first handover mode is a handover mode based on cell handover, the second handover mode is a handover mode based on dual connectivity, the first set is a first PLMN set, the second set is a second PLMN set, the PLMNs in the first PLMN set include the PLMN of the first cell, and the PLMNs in the second PLMN set do not include the PLMN of the first cell. The first cell is a cell corresponding to a first path, and the first path includes a connection between the terminal and the access network device.

The terminal does not need to perform network selection when switching from a PLMN corresponding to a first cell to a cell corresponding to the same PLMN. However, the terminal may need to perform network selection when switching from a PLMN corresponding to the first cell to a cell corresponding to a different PLMN. Therefore, configuring the first set as a set of cells corresponding to the same PLMN is beneficial for a handover method based on cell handover. Configuring the second set as a set of cells corresponding to different PLMNs is beneficial for a handover method based on dual connectivity.

Optionally, the method further includes: receiving eighth information, where the eighth information indicates that the configuration of the handover mode of the terminal has been updated.

The eighth information is used to respond to the permission information, so that the core network device can determine that the terminal has completed the update of the configuration of the handover mode.

According to a fifth aspect, an embodiment of this application provides a communications apparatus. The communications apparatus may include a processing unit and a transceiver unit, configured to perform any one of the methods in the first aspect and its optional implementations, or any one of the methods in the second aspect and its optional implementations, or any one of the methods in the third aspect and its optional implementations, or any one of the methods in the fourth aspect and its optional implementations. The transceiver unit is referred to as a sending unit when performing a sending step, and is referred to as a receiving unit when performing a receiving step.

According to a sixth aspect, an embodiment of this application provides a communications apparatus. The communications apparatus may be a terminal, or may be a chip applied to a terminal. The communications apparatus may include a processor, configured to perform any one of the methods in the first aspect and its optional implementations, or any one of the methods in the second aspect and its optional implementations, or any one of the methods in the third aspect and its optional implementations, or any one of the methods in the fourth aspect and its optional implementations.

Optionally, when the communication apparatus is a terminal, the processor may be, for example, a system on chip (system on chip, SoC) or a central processing unit (central processing unit, CPU). When the communication apparatus is a chip, the processor may be, for example, a core (core), and the core may include at least one type of execution unit (execution unit). The execution unit may be, for example, an arithmetic logic unit (arithmetic and logic unit, ALU).

Optionally, the communication apparatus may further include a transceiver. When the communication apparatus is a terminal, the transceiver may be a transceiver circuit, an antenna, or the like. When the communication apparatus is a chip, the transceiver may be an input/output interface, a pin, a circuit, or the like.

Optionally, the communication apparatus may further include a memory. The memory is configured to store a computer program or instructions. The processor executes the computer program or instructions stored in the memory, so that the communication apparatus performs any method in the first aspect and the optional implementations of the first aspect.

According to a seventh aspect, an embodiment of this application provides a communications apparatus. The communications apparatus may be an access network device, or may be a chip applied to an access network device. The communications apparatus may include a processor, configured to perform any one of the methods in the second aspect and its optional implementations, or any one of the methods in the third aspect and its optional implementations.

Optionally, when the communications apparatus is an access network device, the processor may be, for example, a CPU, an application-specific integrated circuit (application specific integrated circuit, ASIC), or a field programmable gate array (field programmable gate array, FPGA). When the communications apparatus is a chip, the processor may be, for example, a core, and the core may include at least one type of execution unit, where the execution unit may be, for example, an ALU.

Optionally, the communications apparatus may further include a transceiver. When the communications apparatus is an access network device, the transceiver may be, for example, a transceiver circuit, an antenna, or the like. When the communications apparatus is a chip, the transceiver may be, for example, an input/output interface, a pin, or a circuit.

Optionally, the communication apparatus may further include a memory. The memory is configured to store a computer program or instructions. The processor executes the computer program or instructions stored in the memory, so that the communication apparatus performs any method in the second aspect and its optional implementations, or so that the communication apparatus performs any method in the third aspect and its optional implementations. When the communication apparatus is an access network device, the memory may be a read-only memory, a random access memory, or the like. When the communication apparatus is a chip, the memory may be a register, a cache, or the like.

According to an eighth aspect, an embodiment of this application provides a communication apparatus. The communication apparatus may be a core network device, or may be a chip applied to a core network device. The communication apparatus may include a processor, configured to perform any method in the fourth aspect and its optional implementations.

Optionally, when the communication apparatus is a core network device, the processor is, for example, a CPU, an ASIC, or an FPGA. When the communication apparatus is a chip, the processor is, for example, a core, and the core may include at least one type of execution unit. The execution unit is, for example, an ALU.

Optionally, the communication apparatus may further include a transceiver. When the communication apparatus is a core network device, the transceiver may be a transceiver circuit, an antenna, or the like. When the communication apparatus is a chip, the transceiver may be an input/output interface, a pin, a circuit, or the like.

Optionally, the communication apparatus may further include a memory. The memory is configured to store a computer program or instructions. The processor executes the computer program or instructions stored in the memory, so that the communication apparatus performs any method in the fourth aspect and the optional implementations of the fourth aspect. When the communication apparatus is a core network device, the memory may be a read-only memory, a random access memory, or the like. When the communication apparatus is a chip, the memory may be a register, a cache, or the like.

According to a ninth aspect, an embodiment of this application provides a communications system. The communications system includes at least two of the following communication apparatuses:
a communication apparatus that performs any method in the first aspect and the optional implementations of the first aspect;
a communications apparatus for performing any method in the second aspect and the optional implementations of the second aspect, or a communications apparatus for performing any method in the third aspect and the optional implementations of the third aspect;
a communications apparatus that performs any method in the fourth aspect and the optional implementations of the fourth aspect.

According to a tenth aspect, an embodiment of this application provides a computer readable storage medium, where the computer readable storage medium stores a computer program, and when the computer program is executed on a communications apparatus, the communications apparatus performs: any method in the first aspect and the optional implementations of the first aspect, or any method in the second aspect and the optional implementations of the second aspect, or any method in the third aspect and the optional implementations of the third aspect, or any method in the fourth aspect and the optional implementations of the fourth aspect.

According to an eleventh aspect, an embodiment of this application provides a computer program product, where the computer program product includes computer program code or a computer program instruction, and when the computer program code or the computer program instruction is run by a communications apparatus, the communications apparatus is enabled to perform: any method in the first aspect and the optional implementations of the first aspect, or any method in the second aspect and the optional implementations of the second aspect, or any method in the third aspect and the optional implementations of the third aspect, or any method in the fourth aspect and the optional implementations of the fourth aspect.

### BRIEF DESCRIPTION OF DRAWINGS

FIG. 1 is a schematic diagram of the architecture of a communications system to which an embodiment of this application is applied;
FIG. 2 is a schematic diagram of the architecture of a core network provided by an embodiment of this application;
FIG. 3 is a schematic diagram of another architecture of a core network provided by an embodiment of this application;
FIG. 4 is a schematic diagram of a cell handover scenario provided by an embodiment of this application.
FIG. 5 is a schematic diagram of a cell handover based on an Xn interface according to an embodiment of this application;
FIG. 6 is a schematic diagram of a registration procedure according to an embodiment of this application;
FIG. 7 is a schematic diagram of a dual connectivity scenario according to an embodiment of this application;
FIG. 8 is a schematic diagram of another dual connectivity scenario according to an embodiment of this application;
FIG. 9 is a schematic diagram of a communication method according to an embodiment of this application;
FIG. 10 is a schematic diagram of another communication method according to an embodiment of this application;
FIG. 11 is a schematic diagram of another communication method according to an embodiment of this application;
FIG. 12 is a schematic diagram of another communication method according to an embodiment of this application;
FIG. 13 is a schematic structural diagram of a communication apparatus according to an embodiment of this application;
FIG. 14 is a schematic structural diagram of another communication apparatus according to an embodiment of this application.

### DESCRIPTION OF EMBODIMENTS

Below, in conjunction with the accompanying drawings, a description of the technical solutions in this application will be provided.

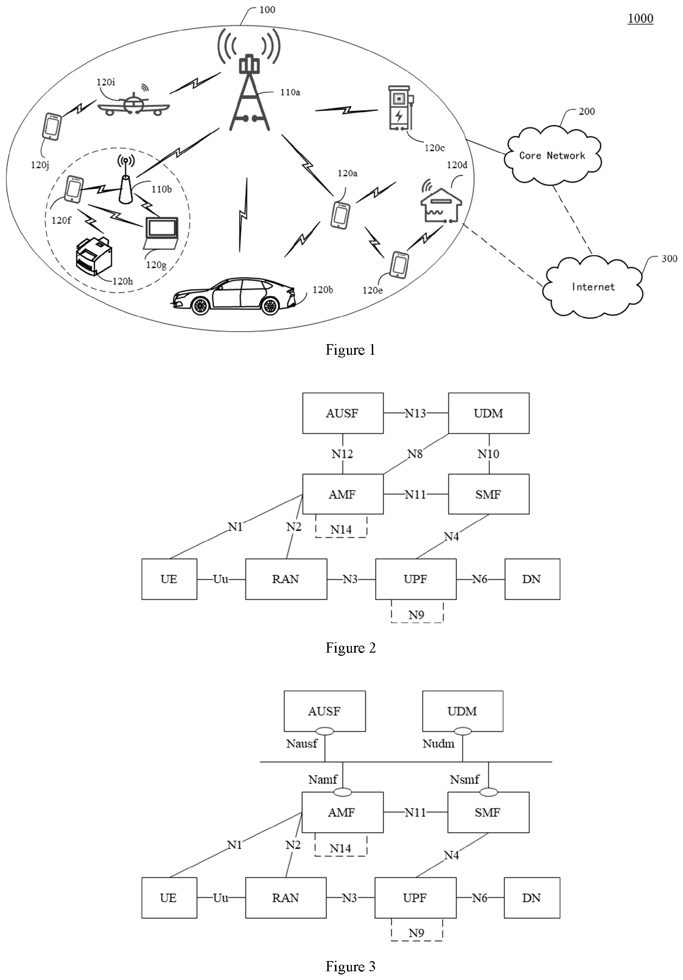

FIG. 1 is a schematic diagram of an architecture of a communications system 1000 to which an embodiment of this application is applied. As shown in FIG. 1, the communications system includes a radio access network (radio access network, RAN) 100. The RAN 100 includes at least one RAN node (as shown in 110a-110b in FIG. 1, collectively referred to as 110), and may further include at least one terminal (as shown in 120a-120j in FIG. 1, collectively referred to as 120)). The RAN 100 may further include another RAN node, for example, a wireless relay device and/or a wireless backhaul device (not shown in FIG. 1)). The terminal 120 is connected to the RAN node 110 in a wireless manner. The terminal 120 may be connected to the RAN node 110 in a wireless manner. The terminal 120 may be connected to the RAN node 110 in a wireless manner. The terminal 120 and the terminal 120, and the RAN node 110 and the RAN node 110 may be connected to each other in a wired or wireless manner. The communications system 1000 may further include a core network (core network, CN) 200. The RAN node 110 is connected to the core network 200 in a wireless or wired manner. The core network device in the core network 200 and the RAN node 110 in the RAN 100 may be independent and different physical devices, or may be a same physical device that integrates logical functions of the core network device and logical functions of the RAN node. The communications system 1000 may further include an internet 300.

RAN100 may be an evolved universal terrestrial radio access (evolved universal terrestrial radio access, E-UTRA) system, a new radio (new radio, NR) system, or a future wireless access system, as defined in the 3rd Generation Partnership Project (3rd generation partnership project, 3GPP). Alternatively, RAN100 may be a WiFi system. RAN100 may also include the two or more different wireless access systems mentioned above. RAN100 may also be an open RAN (open RAN, O-RAN) system.

A RAN node, also referred to as a network device, an access network device, a wireless access network device, a RAN entity, or an access node, is used to help a terminal access a communications system in a wireless manner. Optionally, the RAN node may also be referred to as a RAN.

In one application scenario, a RAN node may be a base station (base station), an evolved NodeB (evolved NodeB, eNodeB), a transmission reception point (transmission reception point, TRP), a next generation NodeB (next generation NodeB, gNB)) in a 5th generation (5th generation, 5G) mobile communications system, a next generation NodeB in a 6th generation (6th generation, 6G) mobile communications system, a NodeB in a future mobile communications system, an access point (access point, AP)) in a WiFi system, an AP in a long range radio (long range radio, LoRa) system, or an AP in a vehicle-to-everything (vehicle-to-everything, V2X)) system. The RAN node may be a macro base station (as shown in 110a in FIG. 1)), a micro base station or an indoor station (as shown in 110b in FIG. 1)), or a relay node or a donor node.

In another application scenario, a plurality of RAN nodes may be coordinated to help the terminal implement radio access, and different RAN nodes separately implement some functions of the base station. For example, the RAN node may be a central unit (central unit, CU), a distributed unit (distributed unit, DU), or a radio unit (radio unit, RU). The CU herein completes functions of a radio resource control (radio resource control, RRC) protocol and a packet data convergence layer protocol (packet data convergence protocol, PDCP) of the base station, and may further complete functions of a service data adaptation protocol (service data adaptation protocol, SDAP). The DU completes functions of a radio link control (radio link control, RLC) layer and a medium access control (medium access control, MAC) layer of the base station, and may further complete functions of some physical (physical, PHY) layers or all physical layers. For details about the foregoing protocol layers, For details, refer to the relevant technical specifications of the 3GPP. The RU may be configured to implement a function of receiving and sending a radio frequency signal. The CU and the DU may be disposed as two independent RAN nodes, or may be integrated into a same RAN node, for example, integrated into a baseband unit (baseband unit, BBU). The RU may be included in a radio frequency device, for example, included in a remote radio unit (remote radio unit, RRU), an active antenna unit (active antenna unit, AAU), or a remote radio head (remote radio head, RRH). The CU may be further divided into two types of RAN nodes: a control plane CU (central unit control plane, CU-CP) and a user plane CU (central unit user plane, CU-UP).

In different systems, RAN nodes may have different names. For example, in an O-RAN system, a CU may be referred to as an open CU (open CU, O-CU), and a DU may be referred to as an open DU (open DU, O-DU). The RU may be referred to as an open RU (open RU, O-RU). The RAN node in the embodiments of this application may be implemented by using a software module, a hardware module, or a combination of a software module and a hardware module. For example, the RAN node may be a server loaded with a corresponding software module. A specific technology and a specific device form used by the RAN node are not limited in this embodiment of this application. For ease of description, an example in which a base station is used as a RAN node is used below for description.

A terminal is a device with a wireless transceiver function, and may send a signal to a base station, or receive a signal from a base station. The terminal may also be referred to as a terminal device, user equipment (user equipment, UE), a mobile station, a mobile terminal, or the like. The terminal may be widely used in various scenarios, for example, device-to-device (device-to-device, D2D), Internet of Vehicles (vehicle to everything, V2X) communication, machine-type communication (machine-type communication, MTC), and the Internet of Things (internet of things). IoT), virtual reality (virtual reality, VR), augmented reality (augmented reality, AR), industrial control, autonomous driving, telemedicine, smart grid, smart furniture, smart office, smart wearable, smart transportation, smart city, and the like. The terminal can be a mobile phone. (120a, 120e, 120f and 120j in FIG. 1), a notebook computer (120g in FIG. 1), a printer with a wireless receiving and sending function (120h in FIG. 1), a wearable device, a vehicle (120b in FIG. 1), a charging pile (120c in FIG. 1), and an aircraft (120i in FIG. 1), ships, robots, robotic arms, smart home equipment, etc. A specific technology and a specific device form used by the terminal are not limited in this embodiment of this application.

As an example instead of a limitation, in the embodiments of this application, the wearable device may also be referred to as a wearable smart device, and is a general term for devices that can be worn by using a wearable technology to perform intelligent design on daily wear and develop wearable devices, such as glasses, gloves, watches, garments, and shoes. The wearable device is a portable device that is directly worn on a body or integrated into a garment or accessory of a user. Wearable devices are not only hardware devices, but also powerful functions through software support, data interaction, and cloud interaction. In a broad sense, the wearable smart device includes an electronic device that has full functions and a large size, and implements complete or partial functions without relying on a smartphone, for example, a smart watch or smart glasses, or an electronic device that focuses only on a specific type of application function and needs to be used together with another device such as a smartphone. For example, smart bracelets and smart jewelry for physical sign measurement.

As an example instead of a limitation, in this embodiment of this application, the vehicle may be a smart car (smart car or intelligent car), a digital car (digital car), or an unmanned car (unmanned car, driverless car, pilotless car, or automobile), an automatic car (self-driving car or autonomous car) or an electric vehicle (EV), where the EV may be a pure electric vehicle (pure EV or battery EV), a hybrid electric vehicle (hybrid electric vehicle, HEV), range extended EV (REEV), plug-in hybrid vehicle (PHEV), or new energy vehicle (new energy vehicle). The various terminals described above, if located on a vehicle (e.g. placed in a vehicle or installed in a vehicle) and may be considered as an in-vehicle terminal, and the in-vehicle terminal may also be referred to as an in-vehicle module, an in-vehicle chip, or an on-board unit (on-board unit, OBU).

The base station and the terminal may be fixed in position, or may be movable. The base station and the terminal may be deployed on land, including indoor or outdoor, handheld or vehicle-mounted; or may be deployed on water surfaces; or may be deployed on aircraft, balloons, and artificial satellites. The application scenarios of the base station and the terminal are not limited by the embodiments of this application.

The roles of the base station and the terminal may be relative. For example, 120i in FIG. 1 (which may be a helicopter or an unmanned aerial vehicle) may be configured as a mobile base station. For 120j that accesses the radio access network 100 through 120i, 120i is a base station; but for 110a, 120i is a terminal, that is, 110a and 120i communicate with each other through a wireless air interface protocol. Of course, 110a and 120i may also communicate with each other through an interface protocol between base stations. In this case, relative to 110a, 120i is also a base station. Therefore, both the base station and the terminal may be collectively referred to as a communications apparatus. 110a and 110b in FIG. 1 may be referred to as communications apparatuses having a base station function, and 120a-120j in FIG. 1 may be referred to as communications apparatuses having a terminal function.

Between the base station and the terminal, between base stations, and between terminals, communication can be conducted through licensed spectrum, unlicensed spectrum, or both licensed and unlicensed spectrum simultaneously. Communication can also be conducted through spectrum below 6 gigahertz (gigahertz, GHz), spectrum above 6 GHz, or both spectrum below 6 GHz and spectrum above 6 GHz simultaneously. The spectrum resources used for wireless communication in the embodiments of this application are not limited.

In the embodiments of this application, the functions of the base station may also be performed by a module (such as a chip) in the base station, or may be performed by a control subsystem that includes the functions of the base station. The control subsystem that includes the functions of the base station herein may be a control center in the foregoing application scenarios such as an intelligent power grid, industrial control, intelligent transportation, and smart city. The functions of the terminal may also be performed by a module (such as a chip or a modem) in the terminal, or may be performed by an apparatus that includes the functions of the terminal.

Below, a brief introduction is provided regarding the functions of the core network 200.

The primary functions of the core network 200 are to provide user connections, user management, and service bearers. Additionally, as a bearer network, it provides interfaces to external networks (e.g., the internet 300)). Optionally, the core network 200 can be divided into the architectures shown in Figure 2 or Figure 3 according to its functions. In this context, Figure 2 describes a core network based on a non-service-oriented architecture, while Figure 3 describes a core network based on a service-based architecture (SBA).

The SBA is primarily reflected in the control plane. The essence of the SBA is to define network functions as several "service" modules that can be flexibly invoked, based on the three principles of "self-contained, reusable, and independently manageable." Based on this, operators can flexibly customize network configurations according to service requirements. The interaction between network functions is implemented through service calls. Each network function presents a universal service-oriented interface externally, which can be invoked by authorized network functions or services.

As shown in FIG. 2 or FIG. 3, the core network 200 includes a user plane function (user plane function, UPF), an access and mobility management function (access and mobility management function, AMF), a session management function (session management function, SMF), a unified data management function (unified data management, UDM), and an authentication server function (authentication server function, AUSF)).

The UPF, AMF, SMF, UDM, and AUSF mentioned above may be referred to as core network elements or core network devices. These network elements may be independent hardware devices from each other, or may be modules integrated into the same hardware device to implement different functions. Alternatively, they may be software functions running on dedicated hardware or virtualized functions instantiated on a cloud platform. The embodiments of this application do not limit a specific form of the core network element.

Below is a brief introduction to the core network NEs in Figure 2 or Figure 3.

The UPF can also be referred to as a user plane device, user plane function network element, user plane network element, or user plane function entity. It can be understood as the naming of the user plane function network element in 5G. The user plane function network element mainly includes the following functions: data packet routing and transmission, packet detection, service usage reporting, QoS processing, lawful interception, uplink packet detection, downlink data packet storage, and other user plane-related functions.

Optionally, the UPF may be divided into a protocol data unit (protocol data unit, PDU) session anchor UPF (PDU session anchor UPF, PSA-UPF) and an intermediate UPF (intermediate UPF, I-UPF). The PSA-UPF is a UPF that supports the PDU session anchor function. The PSA-UPF is a UPF connected to the DN through the N6 interface. The PSA-UPF is responsible for data transmission between the core network and the DN. All UPFs between the RAN and the PSA-UPF can be referred to as I-UPFs. The I-UPF and the RAN can be connected through the N3 interface. The I-UPF and the PSA-UPF can be connected through the N9 interface.

AMF, which can also be referred to as a mobility management device, can be understood as the naming of the mobility management network element in the 5G architecture. The mobility management network element primarily performs the following functions: connection management, mobility management, registration management, access authentication and authorization, reachability management, security context management, and other functions related to access and mobility.

SMF, which can be understood as the naming of the session management function network element in the 5G architecture. The session management function network element primarily performs the following functions: session management, policy control function (PCF) delivery of control policies, UPF selection, and allocation of internet protocol (IP) addresses for the UE.

UDM, which can also be referred to as a unified data management network element, unified data management entity, or data management device, can be understood as the naming of the unified data management network element in the 5G architecture. It is primarily used to handle terminal device identifiers, access authentication, registration, and mobility management, among other functions.

AUSF, also known as the authentication service function network element, authentication service function entity, authentication service device, or authentication device, can be understood as the naming of the authentication service function network element within the 5G architecture. The authentication service function network element is primarily used for user authentication. For example, after receiving an authentication request initiated by a subscribed user, the authentication service function network element may authenticate and/or authorize the subscribed user based on the authentication information and/or authorization information stored in the unified data management network element. Alternatively, the authentication service function network element may generate the authentication and/or authorization information for the subscribed user through the unified data management network element. The authentication service function network element may provide the subscribed user with feedback on the authentication information and/or authorization information.

DN is an example of Internet 300, which is a network located outside the operator network. The operator network (e.g., core network 200) can access multiple DNs. Various services can be deployed on the DNs, and the DNs can provide services such as data and/or voice services for terminal devices. For example, the DN is a private network of an intelligent factory. A sensor installed in a workshop of the intelligent factory may be a terminal device. The DN deploys a control server for the sensor, and the control server may provide services for the sensor. The sensor may communicate with the control server to obtain instructions from the control server, and according to the instructions, transmit the collected sensor data to the control server, and the like. For another example, the DN is an internal office network of a company, and a mobile phone or computer of an employee of the company may be a terminal device. The mobile phone or computer of the employee may access information, data resources, and the like on the internal office network of the company.

In Figure 2, Uu, N1, N2, N3, N4, N6, N8, N9, N10, N11, N12, N13, and N14 are interface sequence numbers. Among them, the dashed lines corresponding to N9 and N14 indicate that these two interfaces are optional interfaces. In Figure 3, Namf is the service-based interface corresponding to the AMF, Nsmf is the service-based interface corresponding to the SMF, Nausf is the service-based interface corresponding to the AUSF, and Nudm is the service-based interface corresponding to the UDM. The meanings of these interfaces shown in Figures 2 and 3 can be referred to the meanings defined in the 3GPP standard protocol, and are not limited herein.

The aforementioned network architecture is merely an example for illustrative purposes. The network architecture applicable to the embodiments of this application is not limited thereto. Any network architecture that includes the ability to implement the functions of the various network elements described above is applicable to the embodiments of this application.

The naming above is defined only for the purpose of distinguishing different functions, and should not be construed as imposing any limitation on this application. This application does not exclude the possibility of using other names in 5G networks and other future networks. For example, in a 6G network, some or all of the above network elements may continue to use the terminology in 5G, or may use other names, etc. The naming of the above interfaces is also just an example. In specific implementation, the names of the interfaces may be other names. This application does not impose any specific limitation on this.

To facilitate understanding of the embodiments of this application, the following briefly describes the technologies related to the embodiments of this application.

### 1. Cell handover (handover).

A cell may be considered as a wireless signal coverage area that provides identification through a PCI or a CGI. A coverage area of each base station may be divided into one or more cells. In Wi-Fi, a coverage area of a signal of a wireless access point (access point, AP) may also be considered as one or more cells. In embodiments of this application, different cells may correspond to different base stations. In other words, different cells may be managed by different base stations, or different cells may belong to different RANs.

The foregoing descriptions about the cell are examples rather than limitations. With the development of technologies, concepts that have the same or similar functions as the cell may emerge. These concepts are also applicable to the embodiments of this application.

Due to the mobility of the terminal or a change in a channel state, a cell connected to the terminal may change. That is, the terminal may switch from one cell to another cell. The cell before the switching may be referred to as a source cell or an anchor (anchor) cell, and the cell after the switching may be referred to as a target cell. In an optional example, the cell handover may be interpreted as that the terminal performs data transmission on the target cell and stops performing data transmission on the source cell, or the cell handover may be interpreted as a change of a transmission cell.

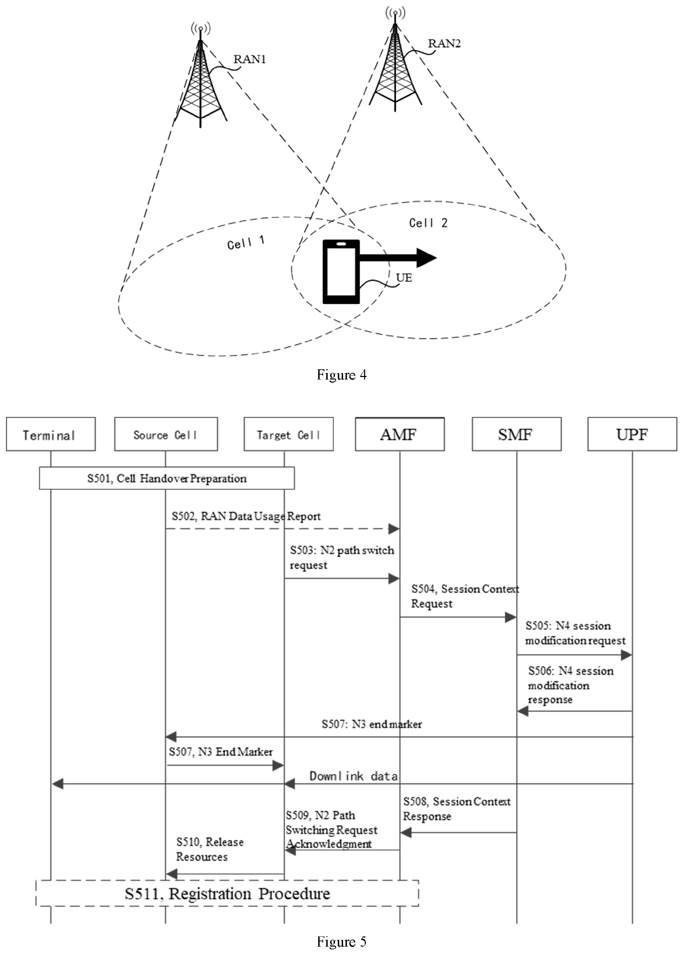

Figure 4 is a schematic diagram illustrating a cell handover scenario.

In Figure 4, cell 1 and cell 2 belong to different RANs, respectively. The terminal is currently performing data transmission in cell 1. As the terminal moves from cell 1 to cell 2, the channel state of cell 1 deteriorates. The terminal can then use cell 2 for transmission and no longer use cell 1 for data transmission. In this case, cell 1 can be referred to as the source cell, and cell 2 can be referred to as the target cell. The process of switching from transmitting data through cell 1 to transmitting data through cell 2 can be referred to as a cell handover.

It should be noted that a cell handover may be triggered by a base station, may be triggered by a terminal, or may be triggered by a third-party device other than the base station and the terminal.

Cell handovers can be divided into handovers based on the Xn interface and handovers based on the N2 interface. The following sections describe these two scenarios in detail.

### 1.1 Cell Handover Based on the Xn Interface.

FIG. 5 is a schematic diagram of a cell handover based on an Xn interface according to an embodiment of this application. The Xn interface is an interface between base stations. If signal quality of a source cell is relatively poor, and a terminal needs to hand over to a target cell, the cell handover based on the Xn interface may be performed. In a process of the cell handover based on the Xn interface, an AMF serving the terminal is usually unchanged.

S501: Prepare for cell handover.

Before performing the handover, the terminal and the source cell need to perform a handover preparation operation. For example, the source cell configures the terminal to perform a measurement procedure. The terminal performs measurement on signal quality of surrounding cells (including the target cell) according to the measurement configuration, and reports a measurement report to the source cell. The source cell determines, according to the measurement report, to perform a handover procedure for the terminal.

S502: The source cell sends a RAN data usage report (RAN Usage data report) to the AMF.

If the PLMN is configured with a second radio access technology (radio access technology, RAT) data usage report, then the source cell may provide the RAN data usage report to the AMF. The report may include content such as N2 session information (N2 SM Information).

S503: The target cell sends an N2 path switch request (N2 Path Switch Request) to the AMF.

The target cell sends an N2 path switch request message to the AMF, notifying the AMF that the terminal has moved to a new cell, and providing a list of PDU sessions to be switched. The N2 path switch request message may include content such as N2 SM Information.

S504: The AMF sends a session context request (Nsmf_PDUSession_UpdateSMContext Request) to the SMF.

After receiving the N2 SM Information from both the source cell and the target cell, the AMF caches the relevant information and sends the N2 SM Information to the SMF.

S505: The SMF sends an N4 session modification request (N4 Session Modification Request) to the UPF.

According to the network deployment, the CN tunnel information (CN Tunnel Info) of the UPF used to connect the target cell and the source cell may be different. If the CN tunnel information of the UPF needs to be reallocated, the CN tunnel information is allocated by the SMF. In this case, the SMF can provide the CN tunnel information to the UPF through an N4 session modification request.

S507. The UPF sends an N4 session modification response (N4 Session Modification Response)) to the SMF.

The UPF may send an N4 session modification response to the SMF after a PDU session corresponding to the N4 session modification request is handed over. Optionally, for a PDU session whose user plane resources are not released, if the UPF has allocated CN tunnel information and needs to allocate different CN tunnel information, the UPF may carry tunnel information for uplink traffic in the N4 session modification response.

S507. The UPF sends an N3 end marker (N3 End Marker).

The UPF may, after a path switch, send one or more "End Marker" data records to each N3 tunnel on the old path, to assist the target cell in reordering. Subsequently, the UPF may send downlink data to the target cell.

S508. The SMF sends a session context response (Nsmf_PDUSession_UpdateSMContext Response)) to the AMF.

For a PDU session with a successful handover, the SMF sends CN tunnel information to the AMF through a session context response. This CN tunnel information is used to establish an N3 tunnel. For a PDU session that is deactivated or whose user plane resources are released, the session context response sent by the SMF to the AMF does not carry CN tunnel information, and then the SMF releases the PDU session. S508 may be performed at any time after the SMF receives the N4 session modification response.

S509. The AMF sends an N2 path switch request acknowledgment (N2 Path Switch Request Ack >)) to the target cell.

The confirmation of the N2 path switch request may include content such as N2 SM Information, Failed PDU Sessions, and UE Radio Capability ID. The AMF may, after receiving the session context response, write the CN tunnel information in the session context response as a part of the N2 SM Information into the N2 path switch request confirmation, and send it to the target cell.

S510: The target cell instructs the source cell to release resources.

The target cell may indicate to the source cell that the handover is successful, thereby triggering the source cell to release resources.

S511: The terminal performs a registration procedure.

If the conditions for a mobility registration update are met, the terminal may initiate a mobility registration update procedure.

### 1.2 Cell Handover Based on the N2 Interface.

Due to new radio conditions or the need for load balancing, if the source cell cannot find the Xn interface of the target cell, or if the source cell receives an error indication indicating that the Xn handover has failed, or if the source cell determines, based on the dynamically learned information, to trigger a cell handover procedure based on the N2 interface, then the source cell may execute the cell handover procedure based on the N2 interface.

Compared to the cell handover procedure based on the Xn interface, in the cell handover procedure based on the N2 interface, there may be no Xn interface between the base station of the target cell and the base station of the source cell. The AMF may be used to complete the transmission of some terminal context information. Since the AMF managing the base station of the target cell may be different from the AMF managing the base station of the source cell, the procedure may further involve the selection and handover of the target AMF. The N2 handover can be divided into two phases:

### Preparation Phase:

Before the source cell determines to initiate a handover procedure, the source cell may send RRC configuration information to the terminal, and send a list of cells that need to measure signal quality to the terminal. The cell list may be an allow-list indicating that the terminal can reselect the cells in the list (which can be understood as cells to which the terminal can subsequently be handed over). The terminal may perform signal quality measurement on the cells in the allow-list, or may perform signal quality measurement on the cells other than the exclude-list. The terminal periodically generates a measurement report and sends it to the source cell. The source cell may initiate a handover procedure based on the measurement report. For example, when the signal quality of the source cell is lower than a certain threshold, and there is a neighboring cell with good signal quality, for example, higher than a certain specific threshold, the source cell determines to hand over the terminal to the neighboring cell.

After the source cell initiates the handover procedure, the main tasks completed during the preparation phase are the resource allocation of the target-side core network and radio network. For example: the SMF selects a new target UPF as an intermediate UPF, the N9 interface tunnel is established between the target UPF and the PSA-UPF, the target cell allocates radio resources, the N3 interface tunnel is established between the target cell and the target UPF, and the UE context is established on the target AMF, etc.

Execution Phase: The source cell notifies the terminal to perform a handover. After the terminal completes the handover, the target cell notifies the target AMF, the target AMF notifies the source AMF, and the source AMF releases the session that was rejected during the handover. The target SMF notifies the PSA-UPF of the information about the target UPF, thereby completing the handover of the downlink data channel. After the handover is completed, subsequent processes may further include a registration process, releasing resources on the source UPF and the source cell, and releasing resources of the indirect data forwarding tunnel, etc.

### 1.3, Registration procedure for 3GPP access types.

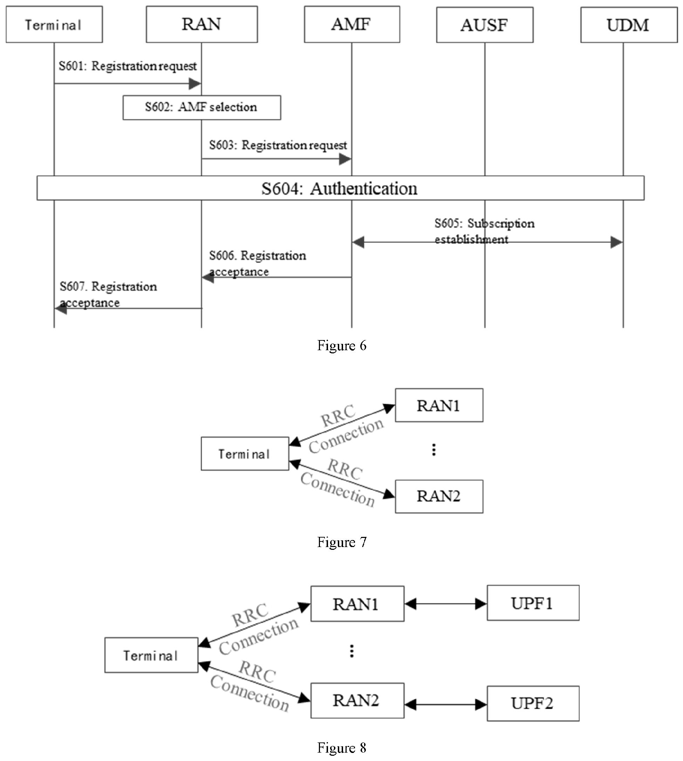

As shown in FIG. 6, the registration procedure of the 3GPP access type includes the following content.

S601, The terminal sends a registration request (Registration Request) to the RAN.

The terminal may send an access network (access network, AN) message to the RAN (equivalent to a cell). The AN message includes AN parameters and a registration request. The AN parameters may be used by the RAN to select an AMF. The registration request includes a registration type and terminal identification information. The terminal identification information may include a subscription concealed identifier (subscription concealed identifier, SUCI)) or a 5G global unique temporary UE identifier (5G global unique temporary UE identifier, 5G-GUTI)).

S602, The RAN selects an appropriate AMF.

S603: The RAN sends the registration request sent by the terminal to the AMF.

S604: The AMF selects an appropriate AUSF to perform security procedures such as authentication.

The terminal, AMF, AUSF, and UDM can complete security procedures such as authentication through interaction.

S605: The AMF interacts with the UDM to complete the subscription process.

After the terminal and the network successfully authenticate each other, the AMF interacts with the UDM to obtain the subscription data of the terminal.

S606. The AMF sends a registration accept (Registration Accept) message to the RAN.

The AMF may send the registration accept message to the RAN by using an N2 message. The N2 message may further include a non-access stratum (non-access stratum, NAS) message sent by the AMF to the terminal.

S607. The RAN forwards the registration accept message of the AMF to the terminal.

### 2. Dual connection.

In this embodiment of this application, dual connectivity refers to a communication manner in which the terminal establishes at least two RRC connections to at least two RANs. Dual connectivity may also be referred to as multi-connection, dual 3GPP access, multiple 3GPP access, dual 3GPP access type (dual 3GPP access type), multiple 3GPP access type (multiple 3GPP access type), and dual 3GPP radio access technologies (dual 3GPP RAT), multiple 3GPP radio access technologies (multiple 3GPP RAT), dual steering (dual steering), multiple steering (multiple steering), dual radio capability (dual radio capability), multiple radio capability (multiple radio capability), a same access type (same access type), a same radio access technology (same RAT), a same access network (same access network), and the like.

FIG. 7 is a schematic diagram of a dual connectivity scenario according to an embodiment of this application. The terminal separately establishes two RRC connections to the RAN1 and the RAN2. Optionally, the terminal may further establish communication connections to more RANs. The communication connections may be RRC connections or non-RRC connections.

FIG. 8 is a schematic diagram of another dual connectivity scenario according to an embodiment of this application. The terminal separately establishes two RRC connections to the RAN1 and the RAN2, and the terminal separately establishes a user plane connection to the UPF1 and the UPF2. There may be a communications interface between the UPF1 and the UPF2, or there may be no communications interface between the UPF1 and the UPF2.

In a dual connectivity scenario, the terminal may actively establish a plurality of RRC connections to a plurality of RANs, and send or receive data by using the plurality of RRC connections. If signal quality of one RRC connection is relatively poor, the terminal may perform communication by using the other RRC connections. FIG. 7 is used as an example. After the terminal separately establishes two RRC connections to the RAN1 and the RAN2, if signal quality of the RRC connection between the terminal and the RAN1 is relatively poor, the terminal may disconnect the RRC connection to the RAN1. transmitting data by using an RRC connection with the RAN2; and; Alternatively, the terminal may no longer transmit data by using the RRC connection of the RAN1, but transmit data by using the RRC connection of the RAN2, where the RRC connection of the RAN1 may be retained, and the signaling may continue to be transmitted by using the RRC connection of the RAN1; or The signaling may be transmitted by using the RRC connection of the RAN2. These cases may be referred to as dual connectivity switching.

### 3. Equivalent PLMN.

An equivalent PLMN (equivalent PLMN, EPLMN) can also be referred to as a same PLMN. The cells corresponding to the EPLMN have some of the same information as the cells corresponding to the registered PLMN (registered PLMN, RPLMN)). This information, such as frequency points and scrambling codes, may be stored in the terminal, which can help speed up the cell selection process. For cell handovers, the terminal can directly switch to the cell corresponding to the equivalent PLMN (or the same PLMN) while in the RRC connected state, without needing to disconnect the RRC connection to perform network selection.

The above-mentioned dual connectivity handover and cell handover have essentially the same effect. Since these two mechanisms are not mutually exclusive, in some scenarios, the terminal can both switch to the target cell through a cell handover and switch to the target cell through a dual connectivity handover. If the terminal simultaneously uses both handover methods, conflicts may arise between the two handover methods, leading to certain issues.

For example, after the terminal switches to the target cell through a dual connectivity handover, the terminal establishes an RRC connection with the target cell. If the terminal then switches to the target cell through a cell handover, the terminal may attempt to establish another RRC connection with the target cell. If the target cell does not support establishing two RRC connections with the same terminal, this will result in a cell handover failure. Even if the target cell supports establishing two RRC connections with the same terminal, there may still be issues such as signal interference between the two RRC connections. In addition, if the target cell selected by the dual connectivity handover is inconsistent with the target cell selected by the cell handover, the terminal may release the connection with one of the target cells. In this case, the terminal establishes connections with multiple target cells during the handover process, leading to unnecessary signaling overhead.

Below is an introduction to the communication method provided by the embodiments of this application.

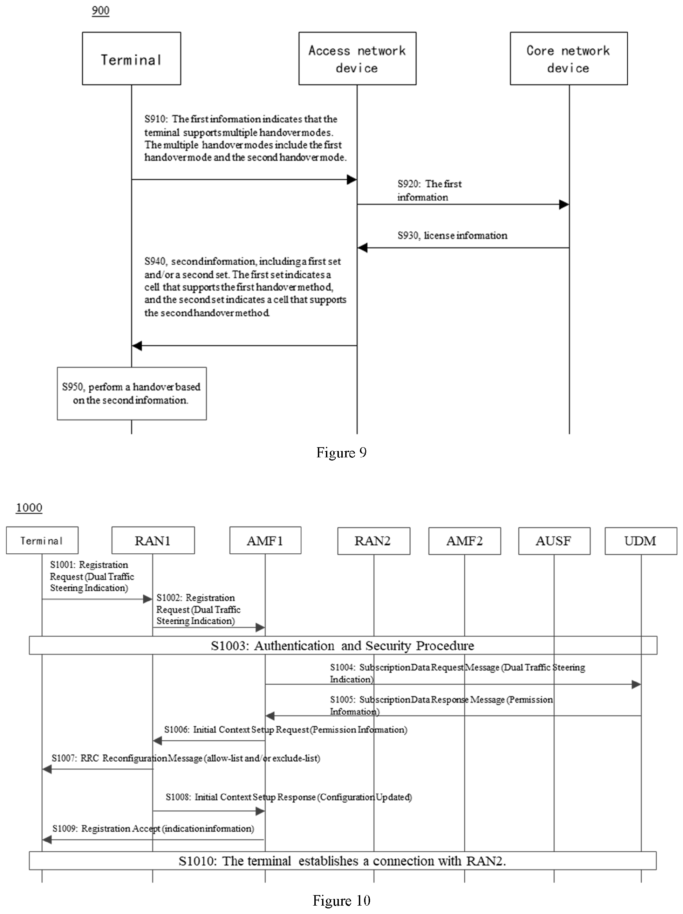

As shown in FIG. 9, method 900 includes the following content.

S910. The terminal sends first information to the access network device, to indicate that the terminal supports multiple handover modes, where the multiple handover modes include a first handover mode and a second handover mode.

Accordingly, the access network device receives the first information from the terminal.

It should be noted that with the development of technology, it is possible that most terminals support multiple handover methods. The access network device and the core network device may assume by default that the terminal supports multiple handover methods, in which case the terminal does not need to send the first information. Therefore, in various embodiments of this application, the steps related to the first information (for example, S910 and S920) are optional steps.

In various embodiments of this application, the access network device may be the RAN node described above, and the RAN node provides the function of a source cell. The communication connection between the terminal and the source cell may be referred to as a first path, and the first path may further include other connections, such as one or more of the following connections: a connection between the access network device and the core network device, a connection between different core network devices, and a connection between the core network device and the DN.

The first information may be carried in an AN message or a NAS message. The embodiments of this application do not limit the message carrying the first information.

The first handover mode may be a handover mode based on cell handover. The second handover mode may be a handover mode based on dual connectivity. Alternatively, the first handover mode may be a handover mode based on dual connectivity, and the second handover mode may be a handover mode based on cell handover. For ease of description, the following uses the first case as an example for description.

In various embodiments of this application, the first handover mode and the second handover mode are used to switch a path. The path may also be referred to as a connection, a communication connection, a data connection, a user plane connection, a channel, a data channel, a user plane channel, a tunnel, a channel, a flow, or a data flow, or the like. The first handover mode may also be referred to as a first change mode, a first transfer mode, or the like. The second handover mode may also be referred to as a second change mode, a second transfer mode, or the like.

Optionally, "the first information indicates that the terminal supports multiple handover modes, and the multiple handover modes include the first handover mode and the second handover mode" may be used to replace the following expression:
The first information indicates that the terminal has multiple handover capabilities; or,
the first information indicates that the terminal supports a second handover mode, wherein the second handover mode is a handover mode based on dual connectivity; or,
The first information indicates that the terminal has the capability of a second handover mode, wherein the second handover mode is a handover mode based on dual connectivity.

Since the first handover mode is a relatively popular technology, and the first information indicates that the terminal supports the second handover mode, the access network device and the core network device may be understood as supporting the terminal in multiple handover modes.

The first information may be a dedicated bit. For example, a value of the bit is 1, indicating that the terminal supports multiple handover modes, or indicating that the terminal supports the second handover mode. A value of the bit is 0, indicating that the terminal does not support multiple handover modes, or indicating that the terminal does not support the second handover mode.

The first information may also be implemented by multiplexing other information. For example, the pilot sequence sent by the terminal to the access network device includes sequence 1 and sequence 2. The terminal may indicate, by sending sequence 1, that the terminal supports multiple handover modes (or the second handover mode). The terminal may indicate, by sending sequence 2, that the terminal does not support multiple handover modes (or the second handover mode).

The embodiments of this application do not limit a specific form of the first information.

Furthermore, the terminal may send the first information when initially accessing the network, or may send the first information in an RRC connected state or an RRC idle state. Alternatively, the terminal may send the first information in other circumstances. The embodiments of this application do not limit a specific timing for the terminal to send the first information.

S920: The access network device sends the first information to the core network device.

Correspondingly, the core network device receives the first information from the access network device. The core network device is, for example, an AMF. After receiving the first information, the access network device determines that the terminal supports multiple handover modes. In this case, the access network device may select an AMF that supports multiple handover modes, and send the first information to the AMF.

The access network device may send the first information to the AMF through a next generation application protocol (next generation application protocol, NGAP)) message or an N2 message. Alternatively, the first information may be sent to the AMF in another manner. A specific manner in which the access network device sends the first information to the AMF is not limited in this embodiment of this application.

It should be noted that the first information sent by the terminal and the first information sent by the access network device may have different forms. For example, the first information sent by the terminal is carried in a message A, and the first information sent by the access network device is carried in a message B. Alternatively, the first information sent by the terminal reuses other information, and the first information sent by the access network device is a dedicated bit.

S930: The core network device sends permission information to the access network device. The permission information indicates that the terminal is allowed to perform a plurality of handover modes, or the permission information indicates that the terminal is allowed to perform the second handover mode.

Accordingly, the access network device receives permission information from the core network device.

In various embodiments of this application, the permission information may be referred to as: authorization information, indication information, policy information, support information, or the like. The specific name of the permission information is not limited in the embodiments of this application.

The permission information indicates that the terminal is allowed to perform multiple handover methods. It can also be expressed as:
The permission information indicates that the network supports multiple handover methods; or, the permission information authorizes the terminal to perform multiple handover methods.

The permission information indicates that the terminal is allowed to perform the second handover method. It can also be expressed as:
The license information indicates that the network supports the second handover mode; or, the license information authorizes the terminal to execute the second handover mode.

The core network device may further include, for example, a UDM. After the AMF forwards the first information to the UDM, the UDM determines whether to allow the terminal to execute multiple handover modes, or the UDM determines whether to allow the terminal to execute the second handover mode. For example, the UDM may determine, based on subscription data of the terminal, whether to allow the terminal to execute the second handover mode. If the UDM determines to allow the terminal to execute multiple handover modes, the UDM may send the license information to the AMF, and the AMF may forward the license information to the access network device.

The core network device may send the license information to the access network device in an explicit or implicit manner. For example, when an explicit manner is used for indication, the license information may be a dedicated bit, and a value of the bit is 1, indicating that the terminal is allowed to execute multiple handover modes, or the terminal is allowed to execute the second handover mode. When an implicit manner is used for indication, the license information may be an empty set, and the empty set is a cell set or a PLMN set corresponding to the first handover mode. Optionally, the core network device may also simultaneously send the dedicated bit and the empty set to the access network device.

In a possible implementation, the permission information is optional information. For example, when the terminal does not need to provide the first information, the core network device may consider that the terminal is allowed to perform the first handover mode and the second handover mode. In this case, the core network device does not need to send the permission information to the access network device, that is, it is assumed by default that the terminal can perform the first handover mode and the second handover mode.

When both the core network device and the terminal support multiple handover modes, both the core network device and the terminal can determine to preferentially perform the first handover mode or the second handover mode. The following separately describes these two scenarios.

Scenario 1: The core network device determines to preferentially perform the first handover mode or the second handover mode.

If the core network device determines to preferentially perform the second handover mode, the core network device may carry some information indicating the access network device in the permission information. For example, the permission information includes at least one of the following information:
5th information, indicating that the access network device does not perform the first handover mode;
sixth information, instructing the access network device to perform a second handover manner; and;
a first PLMN set, where a PLMN in the first PLMN set is not equivalent to a PLMN of a first cell, and the first cell is a cell on a first path; and;
Seventh information indicates that a priority of the first switching manner is lower than a priority of the second switching manner.
indicating the priority of the access technology type of the first handover manner and/or the priority of the access technology type of the second handover manner.

In some cases, if the core network device determines not to perform the first handover manner, the core network device may instruct, by using one or more pieces of information in the grant information, the access network device not to perform the first handover manner, where the fifth information and the sixth information may be dedicated bits. The first PLMN set may be a PLMN set from which an equivalent PLMN is removed from a mobility restriction list (mobility restriction list, MRL), and the seventh information may be a RAT or a frequency selection priority (RAT/frequency selection priority) of the first handover manner and the second handover manner. RFSP). The access network device may instruct, according to the grant information, the terminal not to perform an operation related to the first handover manner, or remove a cell (for example, a cell corresponding to an equivalent PLMN) that supports the first handover manner from the allow-list, or add a cell (for example, a cell corresponding to an equivalent PLMN) that supports the first handover manner to the exclude-list. equivalent to a cell corresponding to a PLMN), so that a conflict problem caused by simultaneous execution of the first handover manner and the second handover manner by the terminal can be avoided.

If the core network device decides to prioritize the execution of the first handover method, it may carry some information indicating the access network device through the permission information. For example, the permission information includes at least one of the following information:
Information indicating that the access network device should execute the first handover method (e.g., a dedicated bit));
Information indicating that the access network device should not execute the second handover method (e.g., a dedicated bit));
A second PLMN set, wherein the PLMN in the second PLMN set is equivalent to the PLMN of the first cell, and the first cell is a cell on the first path (e.g., a PLMN set in an MRL where non-equivalent PLMN's have been removed));
Information indicating that the priority of the first handover method is higher than that of the second handover method (e.g., the RFSP of the first handover method and the second handover method));
Indicates the priority of the access technology type for the first handover method and/or the priority of the access technology type for the second handover method.

Optionally, in some cases-for example, when the access network device is a satellite-the core network device determines not to perform the second handover method. In this case, the core network device may indicate, through one or more pieces of information in the permission information, the access network device not to perform the second handover method. The access network device may instruct the terminal, based on the permission information, not to perform operations related to the second handover method, or remove cells (for example, cells corresponding to non-equivalent PLMNs) in the allow-list that support the second handover method. Alternatively, the core network device may add, to the exclude-list, cells (for example, cells corresponding to non-equivalent PLMNs) that support the second handover method, thereby avoiding conflicts caused by the terminal simultaneously performing the first handover method and the second handover method.

Optionally, if the core network device determines to perform the first handover method first, the core network device may also send, to the terminal, a PLMN set including an equivalent PLMN. In addition, the core network device sends information to the terminal, where the information indicates the terminal to establish a connection only with an access network device corresponding to a PLMN other than the equivalent PLMN when performing the second handover method.

Optionally, the core network device may also directly send a PLMN set suitable for different handover modes to the terminal. The terminal then selects the second cell based on the PLMN set. This method will be described in detail below.

Case 2: The terminal determines to prioritize performing the first handover mode or the second handover mode.

In this case, the core network device may not need to indicate to the access network device which handover mode should be prioritized. Instead, the access network device may indicate to the terminal the cells suitable for different handover modes, and the terminal then determines which handover mode should be prioritized.

For example, when the terminal determines to prioritize performing the first handover mode, the terminal may perform signal measurement in the cell that supports the first handover mode. The cell that supports the first handover mode, for example, is a cell corresponding to the first set described below, or a cell other than the cell corresponding to the first set described below. When the terminal determines to prioritize performing the second handover mode, the terminal may perform signal measurement in the cell that supports the second handover mode. The cell that supports the second handover mode, for example, is a cell corresponding to the second set described below, or a cell other than the cell corresponding to the first set described below.

When the terminal determines to prioritize executing the second handover method, the terminal may further modify the actual signal measurement report, to prevent the access network device from triggering the first handover method. This method will be described in detail below.

It should be noted that in cases 1 and 2, whether to prioritize executing the first handover method or the second handover method can be determined by the core network device or the terminal based on actual circumstances. For example, if the access network device or the core network device supports only one handover method (e.g., the first handover method), the core network device or the terminal may decide to prioritize executing the first handover method. Another example is that if the power consumption of one handover method (e.g., the second handover method) is greater than the power consumption of another handover method (e.g., the first handover method)), the core network device or the terminal may decide to prioritize executing the first handover method. The conditions for prioritizing the execution of the first handover method or the second handover method are not limited in the embodiments of this application.

After receiving the grant information, the access network device may perform the following steps.

S940. The access network device sends second information to the terminal, where the second information includes a first set and/or a second set, the first set indicates a cell supporting the first handover manner, and the second set indicates a cell supporting the second handover manner.

Correspondingly, the terminal receives the second information from the access network device.

If the core network device sends the first set and/or the second set to the access network device, the access network device may forward the first set and/or the second set to the terminal. If the core network device does not send the first set and/or the second set to the access network device, the access network device may determine the first set and/or the second set based on the grant information, and send the first set and/or the second set to the terminal.

Optionally, if the first set and/or the second set are/is a cell set, a PLMN corresponding to a cell in the first cell set is equivalent to a PLMN of the first cell, or a PLMN corresponding to a cell in the first cell set is the same as a PLMN of the first cell; or a PLMN corresponding to a cell in the second cell set and a PLMN of the first cell are not equivalent PLMNs, or a PLMN corresponding to a cell in the second cell set is different from a PLMN of the first cell; or; The first cell is a cell (for example, a source cell) on the first path. a cell in the first cell set is a cell corresponding to a terrestrial network (terrestrial network, TN), and a cell in the second cell set is a cell corresponding to a non-terrestrial network (non-terrestrial network, NTN); or; the access technology type of the cell in the first cell set is the same as the access technology type of the first cell, and the access technology type of the cell in the second cell set is different from the access technology type of the first cell.

Optionally, if the first set and/or the second set is a PLMN set, then the PLMN in the first PLMN set is equivalent to the PLMN of the first cell, or the PLMN in the first PLMN set includes the PLMN of the first cell, or the PLMN in the second PLMN set is not equivalent to the PLMN of the first cell, or the PLMN in the second PLMN set does not include the PLMN of the first cell. Here, the first cell is a cell on the first path (for example, a source cell).

For cell handover, when the terminal is in an RRC connected state, the terminal may directly switch to a cell corresponding to an equivalent PLMN (or, a same PLMN) without disconnecting the RRC connection to perform network selection. Therefore, the first set is configured as an equivalent PLMN set (or, a same PLMN set), or the first set is configured as a set of cells corresponding to an equivalent PLMN (or, a set of cells corresponding to a same PLMN), which is beneficial to a path switching manner based on cell handover.

S950: The terminal performs a handover based on the second information.

The terminal may determine, based on the second information, to switch the first path to the second path by using the first handover manner or the second handover manner. The second path includes a connection between the terminal and a second cell. When the first path is switched to the second path by using the first handover manner, the second cell belongs to a cell indicated by the first set, or the second cell does not belong to a cell indicated by the second set. Alternatively, when the first path is switched to the second path by using the second handover manner, the second cell belongs to a cell indicated by the second set, or the second cell does not belong to a cell indicated by the first set.

It should be noted that the second cell may be a cell that supports the first handover manner or the second handover manner. Alternatively, the second cell may be a cell that supports both the first handover manner and the second handover manner. When the second cell supports both the first handover manner and the second handover manner, and the second information includes the first set and the second set, both the cell indicated by the first set and the cell indicated by the second set may include the second cell.

The first set and the second set may be two lists (for example, an allow-list and an exclude-list), or may be two groups, or may be another form of information set. The embodiments of this application do not limit a specific form of the first set and the second set.

For example, the second information includes the first set, and the first set is a set of cells that support the first handover mode. If the terminal determines to switch the first path to the second path by using the first handover mode, the terminal may measure the cells in the first set, and send a measurement report to the first cell, so that the first cell triggers the first handover mode. If the terminal determines to switch the first path to the second path by using the second handover mode, the terminal may not measure the cells in the first set, but instead select a cell from cells outside the first set as the second cell, establish an RRC connection with the second cell, and switch the first path to the second path by using the second handover mode.

For another example, the second information includes a second set, and the second set is a set of cells that support the second handover mode. If the terminal determines to switch the first path to the second path by using the first handover mode, the terminal may measure a cell in the second set, and may also measure a cell in the first set and the second set, and send a measurement report to the first cell, so that the first cell triggers the first handover mode. If the terminal determines to switch the first path to the second path by using the second handover mode, the terminal may not measure the cell in the first set. The terminal may select one cell from the second set, and the cell in the first set and the second set, as the second cell, establish an RRC connection with the second cell, and switch the first path to the second path by using the second handover mode.

For another example, the second information includes a first set and a second set, the first set is a set of cells that support the first handover mode, and the second set is a set of cells that support the second handover mode. If the terminal determines to switch the first path to the second path by using the first handover mode, the terminal may measure a cell in the first set, and may also measure a cell in the second set and the first set, and send a measurement report to the first cell, so that the first cell triggers the first handover mode. If the terminal determines to switch the first path to the second path by using the second handover mode, the terminal may not measure the cell in the first set. The terminal may select one cell from the second set, and the cell in the first set and the second set, as the second cell, establish an RRC connection with the second cell, and switch the first path to the second path by using the second handover mode.

In a possible implementation, if the terminal determines to switch the first path to the second path through the second handover mode, the terminal may report a measurement report of cell signal quality in the first set reported by the first cell. In the measurement report, all the measurement results of the signal quality corresponding to the cells do not meet the conditions for performing the first handover mode. This avoids the first cell triggering the first handover mode. For example, the terminal may modify the measurement results of the signal quality of the cells in the first set, and adjust the value corresponding to the signal quality in the measurement results to a value lower than the threshold for triggering the first handover mode. Then, the terminal reports the modified measurement results to the first cell, thereby avoiding the first cell triggering the first handover mode. For example, the terminal may not perform cell measurement, but directly generate the measurement results of the signal quality of the cells in the first set. In the measurement results, the value corresponding to the signal quality is lower than the threshold for triggering the first handover mode. Then, the terminal reports the measurement results to the first cell, thereby avoiding the first cell triggering the first handover mode.

As can be seen from the above, the handover method applicable to different cells may vary. The first set and/or the second set indicate the cells corresponding to different handover methods. After determining the handover method, the terminal may select the second cell based on the second information. If it is determined to switch the path through the first handover method, the terminal may select the second cell from the cells that support the first handover method, or avoid selecting the second cell from the cells that support the second handover method. If it is determined to switch the path through the second handover method, the terminal may select the second cell from the cells that support the second handover method, or avoid selecting the second cell from the cells that support the first handover method. In this way, the problem caused by the incompatibility between the selected cell and the determined handover method can be avoided.

It should be noted that, when the terminal switches from the first path to the second path, the first path may be disconnected (that is, a parameter related to the first path is deleted), or the first path may be deactivated (that is, a parameter related to the first path is retained, but the first path is no longer used to transmit data and signaling), or the first path may be switched to the second path for data transmission, and the first path continues to be used to transmit signaling. Alternatively, the first path may be switched to the second path for both data transmission and signaling transmission.

Below, several methods provided by the embodiments of this application are further introduced.

FIG. 10 is another communication method provided by an embodiment of this application. In this method, the core network determines to preferentially perform a dual connectivity handover. As shown in FIG. 10, the method 1000 includes the following content.

S1001: The terminal sends a registration request (registration request) message to RAN1.

The registration request message may be carried in an AN message. The registration request message may include a terminal identifier (for example, SUCI)), a registration type, capability information, and the like. The registration type may be an initial registration, a mobility registration update, or the like. The capability information may include one or more of the following information: a dual steering indication (DualSteer Indication), support for dual connectivity, or a dual radio capability (for example, Dual Radio Capability), or a multi-radio capability (for example, Multiple Radio Capability). The capability information is intended to enable the AMF1 to learn that the terminal has a capability of establishing dual connectivity, so that the AMF1 can determine, based on a network capability and/or a subscription status of the terminal, whether to allow the terminal to proactively establish dual connectivity. In addition to being carried in the capability information, the dual steering indication may also be carried in an AN parameter in the AN message.

As described above, the double split may be replaced by a concept such as dual connectivity. Therefore, the double split indication may also be referred to as: dual connectivity indication, multi-connection indication, dual-3GPP access indication, multi-3GPP access indication, dual-3GPP access type indication, multi-3GPP access type indication, dual-3GPP radio access technology indication, multi-3GPP radio access technology indication, multi-offloading indication, a dual-radio capability indication, a multi-radio capability indication, a same access type indication, a same radio access technology indication, a same access network indication, or the like. In another embodiment of this application, the dual-offload indication may also be replaced by a concept such as a dual-connectivity indication.

An example of a cell that has an RRC connection between the RAN1 and the terminal, that is, the first cell includes a path of the first cell, that is, the first path, and an example of the dual-offloading indication, that is, the first information.

S1002. The RAN1 sends a registration request message to the AMF1.

The RAN1 receives the AN message sent by the terminal, and selects an AMF based on the AN message. For example, when the AN message includes the dual-offload indication, the RAN1 selects, based on the indication information, an AMF that supports management of the "terminal supporting dual radio capabilities/multi-radio capabilities". An AMF that supports dual-radio/multi-radio-capable UEs can be regarded as an AMF that supports dual-registration/multi-registration. (That is, the terminal can perform dual registration or multi-registration by using the same access type.) In the embodiments of this application, "supporting dual registration/multi-registration" may be understood as: supporting dual registration management/multi-registration management, supporting dual registration/multi-registration in a same access type, or supporting dual registration/multi-registration in a same access technology.

If the AN message does not include a dual-streaming indication, then RAN1 may select AMF1 based on information such as the slice and PLMN ID.

After determining AMF1, RAN1 sends a registration request message from the terminal to AMF1. For example, RAN1 sends the registration request message to AMF1 through an NGAP or N2 message. In one possible implementation, RAN1 may send capability information to AMF1, where the capability information includes a dual-streaming indication.

S1003: AMF1 triggers an authentication and security procedure.

S1003 is an optional step. After successful authentication, AMF1 may send a registration request to UDM. This registration request is used by AMF1 to register with UDM as the AMF serving the terminal.

S1004: AMF1 sends a subscription data request message to UDM.

The AMF 1 may request to obtain the subscription information of the terminal from the UDM. In a possible implementation, the AMF 1 may send a subscription data request message (for example, Nudm_SDM_Get Request) to the UDM. The request message may include capability information, and the capability information includes a dual-offload indication, indicating that the terminal supports the dual-radio capability/multi-radio capability.

S1005. The UDM sends a subscription data response message to the AMF1.

The UDM may determine whether the terminal is allowed to perform dual connectivity, or whether the terminal is authorized to perform dual connectivity, or whether the network supports dual multi-radio capabilities, or whether the network supports multi-radio capabilities. In a possible implementation, the UDM may determine, based on the subscription data of the terminal, whether to allow/authorize the terminal to use dual connectivity, and/or the UDM may determine, based on a network capability (for example, the UDM may configure the capability), whether dual wireless connections/multi-wireless connections are supported. If the UDM allows/authorizes the terminal to use the dual connectivity, or if the UDM supports the dual-radio connection/multi-radio connection, the UDM may send a subscription data response message (for example, Nudm_SDM_Get Response) to the AMF, where the message may include the grant information. The permission information indicates that the terminal is allowed to perform multiple handover manners, and the multiple handover manners include a first handover manner and a second handover manner. Alternatively, the permission information indicates that the terminal is allowed to perform the second handover manner. For example, the permission information may be referred to as DualSteer Authorised or DualSteer Supported, and indicates whether the terminal is allowed/authorized/supported to perform dual connectivity, or a dual wireless connection capability/multi-wireless connection capability.

S1006: AMF1 sends an initial context setup request message to RAN1.

The initial context setup request message (Initial Context Setup Request) may include some information indicating that RAN1 does not perform a cell handover, or that under certain conditions, a cell handover is not performed. The information carried in the initial context setup request message can be considered as some examples of grant information.

For example, the grant information may include at least one of the following information:
Information indicating that RAN1 performs a dual connectivity handover (an example of the sixth information));
Information indicating that RAN1 does not perform a cell handover (an example of the fifth information));
A mobility restriction list (mobility restriction list, MRL) that does not include equivalent PLMN information, that is, the PLMNs in the list are not equivalent to the PLMN of the first cell, so that RAN1 will not trigger the terminal to switch to a cell corresponding to an equivalent PLMN through a cell handover. Alternatively, the MRL and the indication information that include the equivalent PLMN information, where the indication information indicates that RAN1 adds the cell corresponding to the PLMN in the MRL to the exclude-list or removes the cell from the allow-list;
RFSP for cell handover and RFSP for dual connectivity handover (an example of the seventh information), where the RFSP for cell handover is higher than the RFSP for dual connectivity handover. In another possible implementation, in the RFSP for cell handover, the high-priority access technology type is different from the high-priority access technology type corresponding to the cell for performing the dual connectivity handover. For example, in the RFSP for cell handover, the high-priority access technology type is a terrestrial network (TN), and the high-priority access technology type corresponding to the cell for performing the dual connectivity handover is a non-terrestrial network (NTN), such as a satellite access technology.

The information mentioned above, which instructs RAN1 to perform a dual connectivity handover, the information that instructs RAN1 not to perform a cell handover, the MRL that does not include equivalent PLMN information, the MRL that includes equivalent PLMN information, the indication information, or the RFSP for cell handover and the RFSP for dual connectivity handover, are all examples of permitted information.

RAN1 does not indicate the terminal to perform signal measurement based on one or more pieces of information in an initial context setup request message (i.e., does not indicate the terminal to execute a cell handover procedure). Alternatively, it indicates the terminal not to perform signal measurement. For example, the allow-list sent to the terminal does not include any cell information. Alternatively, the exclude-list sent to the terminal is updated to include information about cells for which no cell handover is performed (e.g., information about cells corresponding to equivalent PLMNs). Alternatively, the information about cells for which no cell handover is performed (e.g., information about cells corresponding to equivalent PLMNs) is removed from the allow-list.

S1007: RAN1 sends an RRC reconfiguration message to the terminal.

After determining, by using the initial context setup request message, not to perform the cell handover, the RAN1 may update the configuration information to the terminal by using the RRC reconfiguration message. The updated configuration information may include: 1) exclude-list (The list indicates that the UE is not to be handed over to a cell in the list.), the exclude-list may include information about a cell (for example, a neighboring cell) that is not supported by the RAN1, so that the terminal is not handed over to the cell that is not supported by the RAN1, thereby achieving an effect that the terminal is not handed over to another RAN. Alternatively, a list of cells (for example, neighboring cells) of an equivalent PLMN may be included, so that the terminal does not hand over a cell in a non-equivalent PLMN, thereby achieving an effect that the terminal does not hand over to a RAN of another PLMN. Whether cells with the same PLMN (e.g., neighboring cells) are included in the exclude-list may depend on the network policy. For example, when the network only allows the terminal to establish connections with RANs of different PLMNs by using dual connectivity, a cell handover mechanism within a same PLMN can be normally performed, but for inter-PLMN cell handover, a case in which dual connectivity handover and inter-PLMN cell handover conflict exists. Therefore, only inter-PLMN conflicts need to be resolved. If the network policy is to allow the terminal to initiate the dual connectivity at any time, similar problems may occur in a same PLMN. Therefore, cell handovers may be limited to cells in a same RAN, or even not to perform any cell handovers, so as to avoid conflicts. (2) allow-list, where the list indicates a cell to which the terminal can be handed over. For example, when the RAN1 removes all cells from the allow-list, the terminal may be enabled not to perform any cell handover. When the RAN1 removes cells of other RANs from the allow-list, the UE can perform intra-site cell handovers only in the RAN1 base station. When the RAN1 removes a cell corresponding to another PLMN from the allow-list, the terminal may be enabled to perform cell handover within the PLMN only, but not inter-PLMN cell handover. In a possible implementation, handover may be understood as reselection.

The exclude-list and allow-list can coexist simultaneously, or only one of them may exist. The exclude-list and/or allow-list can be considered as an example of the second information.

S1008: RAN1 sends an initial context setup response message to AMF1.

The initial context setup response (Initial Context Setup Response) message indicates to AMF1 that RAN1 has established a context. Optionally, the initial context setup response message may further include information indicating that the configuration of the handover mode for the terminal has been updated. This information may be considered as an example of the eighth information.

S1009: AMF1 sends a registration accept message to the terminal.

Optionally, the registration accept (Registration Accept) message may include indication information, for example, dual-offloading support indication information (DualSteer Supported Indication) or dual-offloading authorization indication information (DualSteer Authorized Indication). Optionally, the registration accept message or the registration accept message that includes the indication information may be triggered by the registration request message in S1002, or the indication information in the registration accept message may be triggered by the double traffic distribution indication in S1002. The dual-offloading support indication information or the dual-offloading authorization indication information is an example of the third information. The third information indicates that the terminal is allowed to perform multiple handover manners, and the multiple handover manners include the first handover manner and the second handover manner.

S1010. The terminal establishes a connection to the RAN 2.

The terminal determines, according to the indication information in the registration accept message, that a dual connectivity handover can be performed, and the terminal may establish a connection to the RAN 2 based on a specific criterion, to initiate a registration procedure (similar to S1001 to S1009). After establishing the connection to the RAN2, the terminal may be switched from the first path (including the path of the RAN1) to the second path (including the path of the RAN2). For example, after the second path is established, signal quality of the first path becomes poor (for example, lower than a signal quality threshold), and the terminal may switch from the first path to the second path.

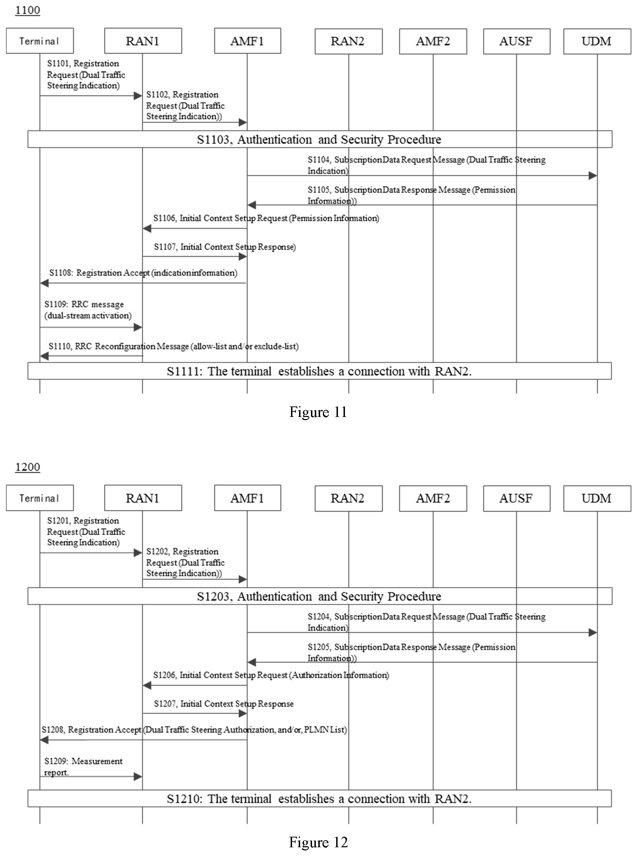

FIG. 11 shows another communication method according to an embodiment of this application. In the method, the terminal decides to perform the dual connectivity handover first. As shown in FIG. 11, the method 1100 includes the following content.

S1101. The terminal sends a registration request (registration request) message to the RAN1.

The registration request message may be carried in an AN message, and the registration request message may include a terminal identifier (for example, SUCI), a registration type, capability information, and the like. The registration type may be initial registration, mobility registration update, or the like. The capability information may include one or more pieces of the following information: a dual-offload indication (DualSteer Indication), a dual connectivity support, a dual radio capability (for example, Dual Radio Capability), or a multi-radio capability (for example, Multiple Radio Capability). The capability information is used to enable the AMF 1 to learn that the terminal has a dual connection establishment capability, so that the AMF 1 determines, based on a network capability and/or a terminal subscription status, whether the terminal is allowed to actively establish the dual connection. In addition to the capability information, the dual-offload indication may also be carried in the AN parameter in the AN message.

RAN1 and the terminal have an RRC connection in a cell, which is an example of the first cell. It includes a path of the first cell, namely, the first path, and a dual connectivity indication, which is an example of the first information.

S1102: RAN1 sends a registration request message to AMF1.

RAN1 receives an AN message sent by the terminal, and selects an AMF based on the AN message. For example, when the AN message includes a dual connectivity indication, RAN1 selects, based on the indication information, an AMF that supports management of "a terminal supporting dual radio capability/multi-radio capability." The AMF that supports management of "a terminal supporting dual radio capability/multi-radio capability" can be understood as an AMF that supports dual registration/multi-registration (that is, the terminal can perform dual registration or multi-registration through the same access type). In various embodiments of this application, "supporting dual registration/multi-registration" may be understood as: supporting dual registration management/multi-registration management, or supporting dual registration/multi-registration under the same access type, or supporting dual registration/multi-registration under the same access technology.

If the AN message does not include a dual-streaming indication, then RAN1 may select AMF1 based on information such as the slice and PLMN ID.

After determining AMF1, RAN1 sends a registration request message from the terminal to AMF1. For example, RAN1 sends the registration request message to AMF1 through an NGAP or N2 message. In one possible implementation, RAN1 may send capability information to AMF1, where the capability information includes a dual-streaming indication.

S1103: AMF1 triggers an authentication and security procedure.

S1103 is an optional step. After successful authentication, AMF1 may send a registration request to UDM. This registration request is used by AMF1 to register with UDM as the AMF serving the terminal.

S1104: AMF1 sends a subscription data request message to UDM.

The AMF 1 may request to obtain the subscription information of the terminal from the UDM. In a possible implementation, the AMF 1 may send a subscription data request message (for example, Nudm_SDM_Get Request) to the UDM. The request message may include capability information, and the capability information includes a dual-offload indication, indicating that the terminal supports the dual-radio capability/multi-radio capability.

S1105. The UDM sends a subscription data response message to the AMF1.

The UDM may determine whether the terminal is allowed to perform dual connectivity, or whether the terminal is authorized to perform dual connectivity, or whether the network supports dual multi-radio capabilities, or whether the network supports multiple radio capabilities. In a possible implementation, the UDM may determine, based on the subscription data of the terminal, whether to allow/authorize the terminal to use dual connectivity, and/or the UDM may determine, based on a network capability (for example, the UDM may configure the capability), whether dual radio connections/multi-radio connections are supported. If the UDM allows/authorizes the terminal to use dual connectivity, or if the UDM supports dual-radio connections/multi-radio connections, the UDM may send a subscription data response message (for example, Nudm_SDM_Get Response) to the AMF. The message may include DualSteer Authorised or DualSteer Supported, indicating whether the terminal is allowed/authorized/supported to perform dual connectivity, or a dual wireless connection capability/multi-wireless connection capability. DualSteer Authorised or DualSteer Supported is an example of licensing information.

S1106: AMF1 sends an initial context setup request message to RAN1.

The initial context setup request message (Initial Context Setup Request) may include some indication information or authorization information that allows RAN1 to perform a dual connectivity handover or multiple handover methods, such as the DualSteer Allowed Indication. Subsequently, RAN1 may determine, based on this information, whether to allow the terminal to perform a dual connectivity handover. For example, when the terminal subsequently wants to perform a dual connectivity handover, it may indicate to RAN1 that it wants to perform a dual connectivity handover. RAN1 may then determine, based on the DualSteer Allowed Indication, that the UE is allowed to perform the handover.

The above-mentioned indication information or authorization information that allows RAN1 to perform a dual connectivity handover or multiple handover methods is an example of permission information.

S1107: RAN1 sends an initial context setup response message to AMF1.

The Initial Context Setup Response message indicates to AMF1 that RAN1 has established the context.

S1108: AMF1 sends a registration accept message to the terminal.

Optionally, the registration accept (Registration Accept) message may include indication information, such as a dual steering support indication (DualSteer Supported Indication) or a dual steering authorization indication (DualSteer Authorized Indication)). Optionally, the registration accept message or the registration accept message containing the indication information may be triggered by the registration request message in S1102. The dual steering support indication or the dual steering authorization indication is an example of the third information, where the third information indicates that the terminal is allowed to perform multiple handover modes, and the multiple handover modes include the first handover mode and the second handover mode.

S1109: The terminal sends an RRC message to RAN1.

After receiving the registration accept message, the terminal determines that it can perform a dual connectivity handover. If the terminal decides to enable the mode for performing a dual connectivity handover, it may send the fourth information to RAN1 through an RRC message. For example, the information may indicate activation of dual steering (Activate DualSteer), or the information may indicate initiation of dual steering.

S1110: RAN1 sends an RRC reconfiguration message to the terminal.

The RRC reconfiguration message may include an exclude-list and/or an allow-list. The meanings of the exclude-list and the allow-list are the same as those of the exclude-list and the allow-list in Method 1000, and will not be described again.

The exclude-list and/or the allow-list may be considered as an example of the second information.

S1111. The terminal establishes a connection with RAN2.

The terminal may determine, based on the third information in S1108 or S1110, to perform a dual connectivity handover. The terminal may establish a connection with RAN2 based on certain criteria and initiate a registration procedure (similar to S1101 to S1110)). After establishing a connection with RAN2, the terminal may switch from the first path (including the path of RAN1) to the second path (including the path of RAN2)). For example, after the second path is established, if the signal quality of the first path deteriorates (for example, falls below a signal quality threshold)), the terminal may switch from the first path to the second path).

FIG. 12 is another communication method provided in an embodiment of this application. In this method, the terminal determines to preferentially perform a dual connectivity handover. As shown in FIG. 12, the method 1200 includes the following content.

S1201. The terminal sends a registration request (registration request) message to RAN1.

The registration request message may be carried in an AN message. The registration request message may include a terminal identifier (for example, SUCI)), a registration type, capability information, and the like. The registration type may be an initial registration, a mobility registration update, or the like. The capability information may include one or more of the following information: a dual steering indication (DualSteer Indication), support for dual connectivity, or dual radio capability (for example, Dual Radio Capability), or multi-radio capability (for example, Multiple Radio Capability). The capability information is intended to enable the AMF1 to learn that the terminal has the capability of establishing dual connectivity, so that the AMF1 can determine, based on the network capability and/or the subscription status of the terminal, whether to allow the terminal to proactively establish dual connectivity. In addition to being carried in the capability information, the dual steering indication may also be carried in the AN parameter in the AN message.

An example of a cell between the RAN1 and the terminal that has an RRC connection is the first cell, and includes a path of the first cell, that is, the first path, and a dual steering indication, that is, an example of the first information.

S1202: RAN1 sends a registration request message to AMF1.

RAN1 receives an AN message sent by the terminal and selects an AMF based on the AN message. For example, when the AN message includes a dual connectivity indication, RAN1 selects, based on the indication information, an AMF that supports managing "terminals supporting dual radio capability/multi-radio capability." The AMF that supports managing "terminals supporting dual radio capability/multi-radio capability" can be understood as an AMF that supports dual registration/multi-registration (i.e., the terminal can perform dual registration or multi-registration through the same access type). In various embodiments of this application, "supporting dual registration/multi-registration" may be understood as: supporting dual registration management/multi-registration management, or, supporting dual registration/multi-registration under the same access type, or, supporting dual registration/multi-registration under the same access technology.

If the AN message does not include a dual connectivity indication, RAN1 may select AMF1 based on information such as a slice and a PLMN ID.

After determining AMF1, RAN1 sends a registration request message from the terminal to AMF1. For example, RAN1 sends a registration request message to AMF1 through an NGAP or N2 message. In a possible implementation, RAN1 may send capability information to AMF1, where the capability information includes a dual connectivity indication.

S1203: AMF1 triggers an authentication and security procedure (e.g., authentication and security procedure).

S1203 is an optional step. After successful authentication, AMF1 may send a registration request to UDM. This registration request is used by AMF1 to register with UDM as an AMF serving the terminal.

S1204: AMF1 sends a subscription data request message to UDM.

AMF1 may request the UDM to obtain subscription information of the terminal. In a possible implementation, AMF1 may send a subscription data request message (for example, Nudm_SDM_Get Request) to UDM. The request message may include capability information, where the capability information includes a dual connectivity indication, indicating that the terminal supports dual radio capability/multi-radio capability.

S1205: The UDM sends a subscription data response message to the AMF1.

The UDM may determine whether to allow the terminal to perform dual connectivity, or whether to authorize the terminal to perform dual connectivity, or whether the network supports dual wireless capability or multi-wireless capability. If the UDM allows/authorizes the terminal to use dual connectivity, or if the UDM supports dual wireless capability/multi-wireless capability, the UDM may send a subscription data response message (for example, Nudm_SDM_Get Response) to the AMF. The message may include DualSteer Authorised or DualSteer Supported, indicating whether to allow/authorize/support the terminal to perform dual connectivity, or dual wireless capability/multi-wireless capability. DualSteer Authorised or DualSteer Supported is an example of the permission information.

S1206: AMF1 sends an initial context setup request message to RAN1.

The initial context setup request message (Initial Context Setup Request) may include some indication information or authorization information that allows RAN1 to perform a dual connectivity handover or multiple handover methods, such as the DualSteer Allowed Indication. Subsequently, RAN1 may determine, based on this information, whether to allow the terminal to perform a dual connectivity handover. For example, when the terminal subsequently wants to perform a dual connectivity handover, it may indicate to RAN1 that it wants to perform a dual connectivity handover. RAN1 may then determine, based on the DualSteer Allowed Indication, whether to allow the UE to perform the handover.

The above-mentioned indication information or authorization information that allows RAN1 to perform a dual connectivity handover or multiple handover methods is an example of permission information.

S1207: RAN1 sends an initial context setup response message to AMF1.

The Initial Context Setup Response message indicates to AMF1 that RAN1 has established the context.

S1208: AMF1 sends a registration accept message to the terminal.

Optionally, the registration accept (Registration Accept) message may include a dual steering support indication (DualSteer Supported Indication) or a dual steering authorization indication (DualSteer Authorized Indication). Optionally, the registration accept message or the registration accept message containing the indication information may be triggered by the registration request message in S1202. The dual steering support indication or the dual steering authorization indication is an example of the third information, where the third information indicates that the terminal is allowed to perform multiple handover modes, and the multiple handover modes include the first handover mode and the second handover mode.

Optionally, the registration accept message may include a PLMN list for DualSteer (PLMN list for DualSteer), indicating a PLMN that allows the execution of a dual connectivity handover. Optionally, the list removes cells corresponding to equivalent PLMNs, or the terminal may autonomously remove cells corresponding to equivalent PLMNs after receiving the list. The PLMN list for DualSteer is an example of the third information.

Optionally, the registration accept message may include a cell list for dual steering, indicating a cell that allows the execution of a dual connectivity handover. If the terminal decides to execute a dual connectivity handover, it may perform any one of the following methods:
S1209: The terminal sends a measurement report to RAN1.

After receiving the registration accept message, the terminal determines that it can perform a dual connectivity handover. If the terminal decides to perform a dual connectivity handover, it may perform any one of the following methods:
1) Determine, based on the PLMN list in S1208, the cell (e.g., a cell corresponding to a non-equivalent PLMN)) that is allowed to perform a dual connectivity handover, perform signal measurement, and send a measurement report.
2) Measure the signal quality of cells outside the allow-list, or measure the signal quality of cells within the exclude-list, and send a measurement report.
3) Measure the signal quality of cells within the allow-list, or measure the signal quality of cells outside the exclude-list, modify the measurement report, and adjust the signal quality value in the measurement report from the first value to the second value, wherein the first value is greater than or equal to the signal quality value corresponding to the cell handover, and the second value is less than the signal quality value corresponding to the cell handover. Then, the measurement report is sent.
4) Do not perform cell measurement, generate a measurement report, wherein the signal quality value in the measurement report is the second value, and the second value is less than the signal quality value corresponding to the cell handover; then, the measurement report is sent.

For Method 3) and Method 4), if the measurement report received by RAN1 indicates that the signal quality of the neighboring cell is relatively poor, then RAN1 will not trigger a cell handover.

S1210. The terminal establishes a connection with RAN2.

The terminal may determine, based on the third information in S1208, to perform a dual connectivity handover. The terminal may establish a connection with RAN2 based on certain criteria, and initiate a registration procedure (similar to S1101 to S1110)). After establishing a connection with RAN2, the terminal may switch from the first path (including the path of RAN1) to the second path (including the path of RAN2)). For example, after the second path is established, the signal quality of the first path deteriorates (for example, is lower than a signal quality threshold)), then the terminal may switch from the first path to the second path.

The foregoing provides a detailed description of the method examples provided in the embodiments of this application. It can be understood that, in order to implement the foregoing functions, the corresponding apparatus includes a hardware structure and/or a software module corresponding to each function. A person skilled in the art should be able to easily realize that, in combination with the embodiments disclosed in this specification, the units and algorithm steps of the examples described can be implemented by hardware or a combination of hardware and computer software. Whether a specific function is performed by hardware or by computer software driving hardware depends on particular application and design constraints of the technical solution. A person skilled in the art can use different methods to implement the described functions for each specific application, but such implementation should not be considered as going beyond the scope of this application.

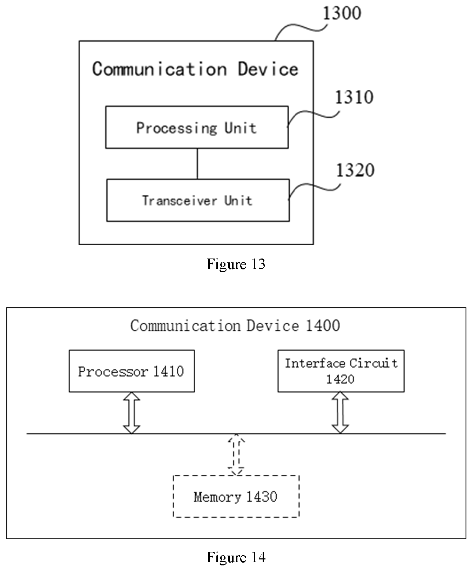

FIG. 13 and FIG. 14 are schematic structural diagrams of two possible communication apparatuses provided in embodiments of this application. These communication apparatuses may be used to implement functions of a terminal, an access network device, or a core network device in the method embodiments described above. Therefore, these communication apparatuses also have the beneficial effects of the method embodiments described above. In embodiments of this application, these communication apparatuses may be the terminal, the RAN node, or the core network device shown in FIG. 1, or may be a module (for example, a chip) applied to the terminal, the RAN node, or the core network device.

As shown in FIG. 13, the communication apparatus 1300 includes a processing unit 1310 and a transceiver unit 1320. Under the control of the processing unit 1310, the transceiver unit 1320 performs a receiving step and/or a sending step. Specifically, when performing the sending step, the transceiver unit 1320 is a sending unit, and when performing the receiving step, the transceiver unit 1320 is a receiving unit. The communication apparatus 1300 is configured to implement functions of the terminal, the access network device, or the core network device in the method embodiments described above with reference to FIG. 9 to FIG. 12.

When the communications apparatus 1300 is configured to implement functions of the terminal in the method embodiments in FIG. 9 to FIG. 12, the transceiver unit 1320 is configured to receive second information by using a first path, where the second information includes a first set and/or a second set, and the first set indicates a cell supporting the first handover manner. the second set indicates a cell that supports the second handover manner; and; The processing unit 1310 is configured to determine to switch a first path to a second path in a first handover manner or a second handover manner, where the second path includes a connection between a terminal and a second cell, and when the first path is switched to the second path in the first handover manner, the second cell belongs to a cell indicated by the first set; or the second cell does not belong to the cell indicated by the second set; and; Alternatively, when the first path is switched to the second path in the second switching manner, the second cell belongs to the cell indicated by the second set, or the second cell does not belong to the cell indicated by the first set.

Optionally, before the second information is received by using the first path, the transceiver unit 1320 is further configured to send the first information by using the first path, where the first information indicates that the terminal supports a plurality of switching manners, and the plurality of switching manners include the first switching manner and the second switching manner.

Optionally, before determining to switch the first path to the second path through the first handover mode or the second handover mode, the transceiver unit 1320 is further configured to: receive third information through the first path, where the third information indicates that the terminal is allowed to perform a plurality of handover modes, and the plurality of handover modes include the first handover mode and the second handover mode.

Optionally, before receiving the second information through the first path, the transceiver unit 1320 is further configured to: send fourth information through the first path, where the fourth information indicates that the terminal is to enable a mode for performing the second handover mode.

Optionally, the processing unit 1310 is further configured to: if it is determined to switch the first path to the second path through the second handover mode, adjust the signal quality value of the second cell from the first value to the second value, where the first value is greater than or equal to the signal quality value corresponding to the first handover mode, and the second value is less than the signal quality value corresponding to the first handover mode. The transceiver unit 1320 is further configured to: send the second value through the first path.

Optionally, the transceiver unit 1320 is further configured to: if it is determined to switch the first path to the second path through the second handover mode, send the signal quality value of the second cell through the first path. The signal quality value of the second cell is lower than the signal quality value corresponding to the first handover mode that triggers the execution of the first handover mode.

Optionally, the first handover mode is a cell-based handover mode, the second handover mode is a dual connectivity-based handover mode, the first set is a first cell set, the second set is a second cell set, the PLMN corresponding to the cell in the first cell set is equivalent to the PLMN of the first cell, the PLMN corresponding to the cell in the second cell set is not equivalent to the PLMN of the first cell, and the first cell is a cell on the first path.

Optionally, the first handover mode is a cell-based handover mode, the second handover mode is a dual connectivity-based handover mode, the first set is a first PLMN set, the second set is a second PLMN set, the PLMN corresponding to the cell in the first PLMN set is equivalent to the PLMN of the first cell, the PLMN corresponding to the cell in the second PLMN set is not equivalent to the PLMN of the first cell, and the first cell is a cell on the first path.

Optionally, the first handover mode is a cell-based handover mode, the second handover mode is a dual connectivity-based handover mode, the first set is a first cell set, the second set is a second cell set, the PLMN corresponding to the cell in the first cell set is the same as the PLMN of the first cell, the PLMN corresponding to the cell in the second cell set is different from the PLMN of the first cell, and the first cell is a cell on the first path.

Optionally, the first handover mode is a handover mode based on cell handover, the second handover mode is a handover mode based on dual connectivity, the first set is a first PLMN set, the second set is a second PLMN set, the PLMN in the first PLMN set includes the PLMN of the first cell, and the PLMN in the second PLMN set does not include the PLMN of the first cell. The first cell is a cell on the first path.

When the communications apparatus 1300 is configured to implement the functions of the access network device in the method embodiments described in FIG. 9 to FIG. 12, the transceiver unit 1320 is configured to: receive permission information from a core network device, where the permission information indicates that the terminal is allowed to perform a plurality of handover modes, and the plurality of handover modes include the first handover mode and the second handover mode; or, the permission information indicates that the terminal is allowed to perform the second handover mode; and send second information to the terminal based on the permission information, where the second information includes the first set and/or the second set, the first set indicates a cell that supports the first handover mode, and the second set indicates a cell that supports the second handover mode.

Optionally, before the grant information is received from the core network device, the transceiver unit 1320 is further configured to receive first information from the terminal by using the first path, where the first information indicates that the terminal supports a plurality of handover manners, and the plurality of handover manners include the first handover manner and the second handover manner. send the first information to the core network device.

Optionally, the transceiver unit 1320 is further configured to send third information to the terminal, where the third information indicates that the terminal is allowed to perform a plurality of handover manners, and the plurality of handover manners include a first handover manner and a second handover manner.

Optionally, before sending the second information to the terminal, the transceiver unit 1320 is further configured to receive fourth information from the terminal, where the fourth information instructs the terminal to enable a mode for performing the second switching manner. The transceiver unit 1320 is further specifically configured to send the second information to the terminal based on the fourth information.

Optionally, the transceiver unit 1320 is specifically configured to send the second information to the terminal by using the first path, where a cell corresponding to the first path is the first cell. the grant information includes at least one piece of the following information: fifth information, indicating that the access network device does not perform the first handover manner; and; sixth information, instructing the access network device to perform a second handover manner; and; a first PLMN set, where a PLMN in the first PLMN set is not equivalent to a PLMN of a first cell, and the first cell is a cell on a first path; and; Seventh information indicates that a priority of the first switching manner is lower than a priority of the second switching manner.

Optionally, the transceiver unit 1320 is further configured to: send eighth information to the core network device, where the eighth information indicates that the configuration of the handover mode of the terminal has been updated.

Optionally, the transceiver unit 1320 is specifically configured to: send second information to the terminal through a first path, where a cell corresponding to the first path is a first cell; the first handover mode is a handover mode based on cell handover, the second handover mode is a handover mode based on dual connectivity, the first set is a first PLMN set, the second set is a second PLMN set, the PLMN corresponding to the cell in the first PLMN set is equivalent to the PLMN of the first cell, and the PLMN corresponding to the cell in the second PLMN set is not equivalent to the PLMN of the first cell.

Optionally, the transceiver unit 1320 is specifically configured to: send second information to the terminal through a first path, where a cell corresponding to the first path is a first cell; the first handover mode is a handover mode based on cell handover, the second handover mode is a handover mode based on dual connectivity, the first set is a first PLMN set, the second set is a second PLMN set, the PLMN corresponding to the cell in the first PLMN set is equivalent to the PLMN of the first cell, and the PLMN corresponding to the cell in the second PLMN set is not equivalent to the PLMN of the first cell.

Optionally, the transceiver unit 1320 is specifically configured to: send second information to the terminal through a first path, where a cell corresponding to the first path is a first cell; the first handover manner is a handover manner based on cell handover, the second handover manner is a handover manner based on dual connectivity, the first set is a first cell set, the second set is a second cell set, the PLMN corresponding to the cell in the first cell set is the same as the PLMN of the first cell, and the PLMN corresponding to the cell in the second cell set is different from the PLMN of the first cell.

Optionally, the transceiver unit 1320 is specifically configured to: send second information to the terminal through a first path, where a cell corresponding to the first path is a first cell; the first handover manner is a handover manner based on cell handover, the second handover manner is a handover manner based on dual connectivity, the first set is a first PLMN set, the second set is a second PLMN set, the PLMN corresponding to the cell in the first PLMN set includes the PLMN of the first cell, and the PLMN corresponding to the cell in the second PLMN set does not include the PLMN of the first cell.

When the communication apparatus 1300 is configured to implement the functions of the access network device in the method embodiments described in FIG. 9 to FIG. 12, the transceiver unit 1320 is configured to: receive permission information from the core network device, where the permission information indicates that the terminal is allowed to perform a plurality of handover modes, and the plurality of handover modes include a first handover mode and a second handover mode; or, the permission information indicates that the terminal is allowed to perform the second handover mode; and receive fourth information from the terminal through the first path, where the fourth information indicates that the terminal enables a mode for performing the second handover mode.

Optionally, before receiving the permission information from the core network device, the transceiver unit 1320 is further configured to: receive first information from the terminal through the first path, where the first information indicates that the terminal supports a plurality of handover modes, and the plurality of handover modes include a first handover mode and a second handover mode; and send the first information to the core network device.

Optionally, the transceiver unit 1320 is further configured to: send third information to the terminal through the first path, where the third information indicates that the terminal is allowed to perform a plurality of handover modes.

Optionally, the permission information includes at least one of the following information: fifth information, indicating that the access network device does not perform the first handover mode; sixth information, indicating that the access network device performs the second handover mode; a first PLMN set, where a PLMN corresponding to a cell in the first PLMN set is not equivalent to a PLMN of the first cell, and the first cell is a cell on the first path; and seventh information, indicating that a priority of the first handover mode is lower than a priority of the second handover mode.

Optionally, the transceiver unit 1320 is further configured to: send eighth information to the core network device, where the eighth information indicates that the handover mode configuration of the terminal has been updated.

Optionally, the first handover mode is a handover mode based on cell handover, the second handover mode is a handover mode based on dual connectivity, the first set is a first cell set, the second set is a second cell set, the PLMN corresponding to the cell in the first cell set is equivalent to the PLMN of the first cell, and the first cell is a cell on the first path, and the PLMN corresponding to the cell in the second cell set is not equivalent to the PLMN of the first cell. The first cell is a cell on the first path.

Optionally, the first handover mode is a cell-based handover mode, the second handover mode is a dual connectivity-based handover mode, the first set is a first cell set, the second set is a second cell set, the PLMN corresponding to the cell in the first cell set is the same as the PLMN of the first cell, and the PLMN corresponding to the cell in the second cell set is different from the PLMN of the first cell. The first cell is a cell on the first path.

Optionally, the first handover mode is a cell-based handover mode, the second handover mode is a dual connectivity-based handover mode, the first set is a first cell set, the second set is a second cell set, the PLMN corresponding to the cell in the first cell set is the same as the PLMN of the first cell, and the PLMN corresponding to the cell in the second cell set is different from the PLMN of the first cell. The first cell is a cell on the first path.

Optionally, the first handover mode is a cell-based handover mode, the second handover mode is a dual connectivity-based handover mode, the first set is a first PLMN set, the second set is a second PLMN set, the PLMN in the first PLMN set includes the PLMN of the first cell, and the PLMN in the second PLMN set does not include the PLMN of the first cell. The first cell is a cell on the first path.

When the communication apparatus 1300 is configured to implement the functions of the core network device in the method embodiments described in FIG. 9 to FIG. 12, the processing unit 1310 is configured to: determine permission information, where the permission information indicates that the terminal is allowed to perform a plurality of handover modes, and the plurality of handover modes include a first handover mode and a second handover mode; or, the permission information indicates that the terminal is allowed to perform the second handover mode. The transceiver unit 1320 is configured to: send the permission information.

Optionally, before the permission information is determined, the transceiver unit 1320 is further configured to: receive first information, where the first information indicates that the terminal supports a plurality of handover modes, and the plurality of handover modes include a first handover mode and a second handover mode.

Optionally, the permission information includes at least one of the following information: fifth information, indicating that the access network device does not perform the first handover mode; sixth information, indicating that the access network device performs the second handover mode; a first PLMN set, where a PLMN in the first PLMN set is not equivalent to a PLMN of a first cell, and the first cell is a cell on a first path, where the first path includes a connection between the terminal and the access network device; and seventh information, indicating that a priority of the first handover mode is lower than a priority of the second handover mode.

Optionally, the license information includes a first set and/or a second set. The first set indicates a PLMN that supports the first handover mode, and the second set indicates a PLMN that supports the second handover mode.

Optionally, the first handover mode is a handover mode based on cell handover, the second handover mode is a handover mode based on dual connectivity, the first set is a first PLMN set, the second set is a second PLMN set, the PLMN in the first PLMN set is equivalent to the PLMN of the first cell, and the PLMN in the second PLMN set is not equivalent to the PLMN of the first cell. The first cell is a cell on the first path, and the first path includes a connection between the terminal and the access network device.

Optionally, the first handover mode is a handover mode based on cell handover, the second handover mode is a handover mode based on dual connectivity, the first set is a first PLMN set, the second set is a second PLMN set, the PLMN in the first PLMN set includes the PLMN of the first cell, and the PLMN in the second PLMN set does not include the PLMN of the first cell. The first cell is a cell on the first path, and the first path includes a connection between the terminal and the access network device.

Optionally, the transceiver unit 1320 is further configured to: receive eighth information, where the eighth information indicates that the handover mode configuration of the terminal has been updated.

A person skilled in the art can clearly understand that, when the communication apparatus 1300 is configured to implement functions of a terminal, an access network device, or a core network device, a specific working process of the communication apparatus 1300 and a technical effect produced by performing the steps can refer to the descriptions in the corresponding method implementation embodiments. For the sake of brevity, they are not described in detail herein.

In the communication apparatus 1300, the processing unit 1310 may be implemented by hardware or by software. When implemented by hardware, the processing unit 1310 may be a logic circuit, an integrated circuit, or the like. When implemented by software, the processing unit 1310 may be a general-purpose processor, and is implemented by reading software code stored in a storage unit. The storage unit may be integrated into the processing unit 1310, or may be located outside the processing unit 1310 and exist independently.

As shown in FIG. 14, the communications apparatus 1400 includes a processor 1410 and an interface circuit 1420. The processor 1410 and the interface circuit 1420 are coupled to each other. It can be understood that the interface circuit 1420 may be a transceiver or an input/output interface. Optionally, the communications apparatus 1400 may further include a memory 1430, configured to store instructions executed by the processor 1410, or store input data required for the processor 1410 to run instructions, or store data generated after the processor 1410 runs instructions.

When the communications apparatus 1400 is configured to implement the method shown in FIG. 9 to FIG. 12, the processor 1410 is configured to implement the functions of the processing unit 1410 in the foregoing method, and the interface circuit 1420 is configured to implement the functions of the transceiver unit 1420 in the foregoing method.

When the communications apparatus 1400 is a terminal chip (that is, a chip applied to a terminal)), the terminal chip implements functions of the terminal in the method embodiment. The terminal chip receives information from an access network device. It may be understood that the information is first received by another module (for example, a radio frequency module or an antenna) in the terminal), and then sent by these modules to the terminal chip. The terminal chip sends information to the access network device. It may be understood that the information is first sent to another module (for example, a radio frequency module or an antenna) in the terminal), and then sent by these modules to the access network device.

When the communication apparatus 1600 is a chip of a core network device (i.e., a chip applied to a core network device), the chip of the core network device implements the functions of the core network device in the method embodiments described above. The chip of the core network device receives information from the access network device, which can be understood as the information being first received by other modules (such as a radio frequency module or an antenna) in the access network device, and then sent by these modules to the chip of the core network device. The chip of the core network device sends information to the access network device, which can be understood as the information being first sent to other modules (such as a communication interface module) in the core network device, and then sent by these modules to the access network device.

When the communication apparatus 1600 is a chip of an access network device (i.e., a chip applied to an access network device), the chip of the access network device implements the functions of the access network device in the method embodiments described above. The chip of the access network device receives information from the core network device, which can be understood as the information being first received by other modules (such as a communication interface module) in the core network device, and then sent by these modules to the chip of the access network device. The chip of the access network device sends information to the core network device, which can be understood as the information being first sent to other modules (such as a communication interface module) in the core network device, and then sent by these modules to the access network device.

In this application, entity A sends information to entity B. This can be done either directly by A to B, or indirectly by A through other entities to B. Similarly, entity B receives information from entity A. This can be done either directly by B receiving the information sent by A, or indirectly by B receiving the information sent by A through other entities. Here, entities A and B can be RAN nodes or terminals, or they can be modules within an RAN node or terminal. The sending and receiving of information can be information exchange between an RAN node and a terminal, for example, information exchange between a base station and a terminal. Alternatively, the sending and receiving of information can be information exchange between two RAN nodes, for example, information exchange between a CU and a DU. The sending and receiving of information can also be information exchange between different modules within an apparatus. For example, information exchange between a terminal chip and other modules of the terminal, or information exchange between a base station chip and other modules of the base station.

It may be understood that the processor in the embodiments of this application may be a central processing unit (central processor unit, CPU), or may be another general-purpose processor, a digital signal processor (digital signal processor, DSP), or an application specific integrated circuit (application specific integrated circuit). ASIC), field programmable gate array (FPGA), or other programmable logic devices, transistor logic devices, hardware components, or any combination thereof. The general-purpose processor may be a microprocessor, or may be any conventional processor.

The method steps in the embodiments of this application may be implemented in hardware, or may be implemented in a software instruction executable by a processor. The software instruction may be formed by corresponding software modules, and the software modules may be stored in random access memory, flash memory, read-only memory, programmable read-only memory, erasable programmable read-only memory, electrically erasable programmable read-only memory, register, hard disk, removable hard disk, and CD-ROM memory (compact disc read-only memory, CD-ROM) or any other form of storage medium well known in the art. An exemplary storage medium is coupled to the processor, so that the processor can read information from the storage medium and can write information to the storage medium. Alternatively, the storage medium may be a component of the processor. The processor and the storage medium may be located in the ASIC. In addition, the ASIC may be located in a base station or a terminal. Alternatively, the processor and the storage medium may exist in a base station or a terminal as discrete components.

All or some of the foregoing embodiments may be implemented by using software, hardware, firmware, or any combination thereof. When implemented by using software, all or some of the applications may be implemented in a form of a computer program product. The computer program product includes one or more computer programs or instructions. When the computer program or instruction is loaded and executed on a computer, all or some of the procedures or functions described in the embodiments of this application are performed. The computer may be a general-purpose computer, a dedicated computer, a computer network, a network device, user equipment, or another programmable apparatus. The computer program or instruction may be stored in a computer readable storage medium, or transmitted from one computer readable storage medium to another computer readable storage medium. For example, The computer program or instruction may be transmitted from one website site, computer, server, or data center to another website site, computer, server, or data center, in a wired or wireless manner. The computer readable storage medium may be any usable medium accessible by a computer, or a data storage device such as a server or a data center that integrates one or more usable media. The usable medium may be a magnetic medium, for example, a floppy disk, a hard disk, or a magnetic tape. It may also be an optical medium, for example, a digital video disc; It may also be a semiconductor medium, for example, a solid state disk. The computer-readable storage medium may be a volatile or non-volatile storage medium, or may include two types of storage mediums: volatile and non-volatile.

Finally, regarding the embodiments of this application, there are the following additional explanations:
First, in the embodiments of this application, the first, second, and various numerical labels are merely for the convenience of description and are used to distinguish between different entities. They are not intended to limit the scope of the embodiments of this application. For example, the first primary cell and the second primary cell represent two primary cells, which may be two different cells or may be the same cell.
Second, in the embodiments of this application, "indication" may include direct indication and indirect indication, and may also include explicit indication and implicit indication. The information indicated by a certain piece of information is referred to as the to-be-indicated information. In a specific implementation process, there are many ways to indicate the to-be-indicated information. For example, the to-be-indicated information may be directly indicated, such as the to-be-indicated information itself or an index of the to-be-indicated information. Alternatively, the to-be-indicated information may be indirectly indicated by indicating other information. In this case, there is an association relationship between the other information and the to-be-indicated information. Alternatively, only a part of the to-be-indicated information may be indicated, while other parts of the to-be-indicated information are known or pre-agreed. For example, whether a certain information element exists may be used to indicate the to-be-indicated information, thereby reducing the indication overhead to some extent. In the case of a pre-agreed (for example, as specified in a protocol) existence of a certain information element, the to-be-indicated information may be indicated. In this way, the indication overhead can be reduced to some extent.
Third, in the embodiments of this application, the "protocol" may refer to a standard protocol in the communications field. For example, it may include the LTE protocol, the NR protocol, and related protocols in future communications systems. This application does not impose any limitation on this.
Fourth, "predefined" or "preconfigured" may be implemented by pre-storing corresponding code, tables, or other information that can indicate related information in a device (for example, a terminal or a base station). This application does not impose any limitation on a specific implementation. Herein, "storing" may refer to storing in one or more memories. The one or more memories may be separately disposed, or may be integrated into a processor or a communications apparatus. The one or more memories may alternatively include one part that is separately disposed and one part that is integrated into the processor or the communications apparatus.
Fifth, "at least one" refers to one or more, and "a plurality of" refers to two or more. "and/or" describes an association relationship between associated objects, and indicates that three relationships may exist. For example, A and/or B may indicate a case in which only A exists, only B exists, and both A and B exist, where A and B may be a single object or multiple objects. The character "/" generally indicates that the associated objects are in the OR relationship. "At least one of the following" or a similar expression thereof refers to any combination of these items, including any combination of a single item or a plural item. For example, at least one (one) of a, b, and c may represent: a, or b, or c, or a and b, or a and c, or b and c, or a, b and c, or a, b, and c. a, b, and c may be a single object, or may be multiple objects.
Sixth, in the embodiments of this application, descriptions such as "when...," "in the case of...," "if," and "if" all refer to a situation where, under certain objective circumstances, a device (for example, a terminal or a base station) will perform corresponding processing. These descriptions do not limit the time, nor do they require the device to have a judgment action when implementing the processing, nor do they imply the existence of other limitations.
Seventh, in various embodiments of this application, unless otherwise specified or there is a logical conflict, the terms and/or descriptions in different embodiments are consistent and can be mutually referenced. The technical features in different embodiments can be combined to form a new embodiment according to their inherent logical relationships.

## Claims

1. A communication method, **characterized in that** the method comprises:
receiving second information through a first path, wherein the second information comprises a first set and/or a second set, the first set indicates a cell supporting a first handover manner, and the second set indicates a cell supporting a second handover manner.
Determine to switch the first path to a second path through the first handover method or the second handover method, wherein the second path includes a connection between the terminal and a second cell, and
when the first path is switched to the second path through the first handover method, the second cell belongs to the cells indicated by the first set, or the second cell does not belong to the cells indicated by the second set; or
when the first path is switched to the second path through the second handover method, the second cell belongs to the cells indicated by the second set, or the second cell does not belong to the cells indicated by the first set.

2. The method according to claim 1, wherein before the determining to switch the first path to the second path through the first handover method or the second handover method, the method further comprises:
receiving third information through the first path, wherein the third information indicates that the terminal is allowed to perform multiple handover methods, and the multiple handover methods include the first handover method and the second handover method.

3. The method according to claim 1 or 2, wherein before the receiving second information through a first path, the method further comprises:
Sending a fourth information through the first path, wherein the fourth information instructs the terminal to enable a mode for performing the second handover manner.

4. The method according to any one of claims 1 to 3, wherein the method further comprises:
If it is determined to switch the first path to the second path through the second handover manner, then adjust the signal quality value of the second cell from a first value to a second value, wherein the first value is greater than or equal to a signal quality value corresponding to the first handover manner, and the second value is less than the signal quality value corresponding to the first handover manner.
Sending the second value through the first path.

5. The method according to any one of claims 1 to 4, wherein before the receiving second information by using a first path, the method further comprises:
sending first information by using the first path, wherein the first information indicates that the terminal supports a plurality of handover manners, and the plurality of handover manners comprise a first handover manner and a second handover manner.

6. The method according to any one of claims 1 to 5, wherein the first handover manner is a cell handover based handover manner, the second handover manner is a dual connectivity based handover manner, the first set is a first cell set, and the second set is a second cell set; and a public land mobile network PLMN corresponding to a cell in the first cell set is equivalent to a PLMN of a first cell, a PLMN corresponding to a cell in the second cell set is not equivalent to a PLMN of the first cell, and the first cell is a cell corresponding to the first path.

7. The method according to any one of claims 1 to 5, wherein the first handover manner is a cell handover based handover manner, the second handover manner is a dual connectivity based handover manner, the first set is a first PLMN set, and the second set is a second PLMN set; and a PLMN in the first PLMN set is equivalent to a PLMN of a first cell, a PLMN in the second PLMN set is not equivalent to a PLMN of the first cell, and the first cell is a cell corresponding to the first path.

8. The method according to any one of claims 1 to 5, wherein the first handover manner is a cell-based handover manner, the second handover manner is a dual connectivity-based handover manner, the first set is a first cell set, the second set is a second cell set, the PLMN corresponding to the cell in the first cell set is the same as the PLMN of the first cell, and the PLMN corresponding to the cell in the second cell set is different from the PLMN of the first cell, wherein the first cell is a cell corresponding to the first path.

9. The method according to any one of claims 1 to 5, wherein the first handover manner is a cell-based handover manner, the second handover manner is a dual connectivity-based handover manner, the first set is a first PLMN set, the second set is a second PLMN set, the PLMN corresponding to the cell in the first PLMN set includes the PLMN of the first cell, and the PLMN corresponding to the cell in the second PLMN set does not include the PLMN of the first cell, wherein the first cell is a cell corresponding to the first path.

10. A communication method, **characterized in that** the method includes:
receiving permission information from a core network device, wherein the permission information indicates that a terminal is allowed to perform multiple handover modes, and the multiple handover modes include a first handover mode and a second handover mode; or, the permission information indicates that the terminal is allowed to perform the second handover mode.
According to the permission information, sending second information to the terminal, wherein the second information comprises a first set and/or a second set, the first set indicates a cell that supports the first handover mode, and the second set indicates a cell that supports the second handover mode.

11. The method according to claim 10, **characterized in that** before receiving the permission information from the core network device, the method further comprises:
receiving first information from the terminal, wherein the first information indicates that the terminal supports multiple handover modes, and the multiple handover modes include the first handover mode and the second handover mode.
Send the first information to the core network device.

12. The method according to claim 10 or 11, wherein the method further comprises:
Sending third information to the terminal, wherein the third information indicates that the terminal is allowed to perform multiple handover modes, and the multiple handover modes include a first handover mode and the second handover mode.

13. The method according to claim 12, wherein before the sending second information to the terminal, the method further comprises:
Receiving fourth information from the terminal, wherein the fourth information indicates that the terminal is to be enabled to execute the second handover mode.
The sending second information to the terminal comprises:
Sending the second information to the terminal based on the fourth information.

14. The method according to any one of claims 10 to 13, wherein the sending second information to the terminal comprises: sending the second information to the terminal through a first path, wherein a cell corresponding to the first path is a first cell;
The permission information includes at least one of the following information:
Fifth information, indicating that the access network device does not perform the first handover mode;
Sixth information, indicating that the access network device performs the second handover method;
A first set of public land mobile networks (PLMNs), wherein the PLMNs in the first PLMN set are not equivalent to the PLMN of the first cell;
Seventh information, indicating that the priority of the first handover method is lower than the priority of the second handover method.

15. The method according to any one of claims 10 to 14, wherein the method further comprises:
sending eighth information to the core network device, wherein the eighth information indicates that the handover method configuration of the terminal has been updated.

16. The method according to any one of claims 10 to 15, wherein the sending second information to the terminal comprises: sending the second information to the terminal through a first path, wherein a cell corresponding to the first path is a first cell; a first handover manner is a handover manner based on cell handover, the second handover manner is a handover manner based on dual connectivity, the first set is a first cell set, the second set is a second cell set, the PLMN corresponding to the cell in the first cell set is equivalent to the PLMN of the first cell, and the PLMN corresponding to the cell in the second cell set is not equivalent to the PLMN of the first cell.

17. The method according to any one of claims 10 to 15, wherein the sending second information to the terminal comprises: sending the second information to the terminal through a first path, wherein a cell corresponding to the first path is a first cell; a first handover manner is a handover manner based on cell handover, the second handover manner is a handover manner based on dual connectivity, the first set is a first PLMN set, the second set is a second PLMN set, the PLMN corresponding to the cell in the first PLMN set is equivalent to the PLMN of the first cell, and the PLMN corresponding to the cell in the second PLMN set is not equivalent to the PLMN of the first cell.

18. The method according to any one of claims 10 to 15, wherein the sending second information to the terminal comprises: sending the second information to the terminal by using a first path, wherein a cell corresponding to the first path is a first cell; a first handover manner is a handover manner based on cell handover, the second handover manner is a handover manner based on dual connectivity, the first set is a first cell set, the second set is a second cell set, the PLMN corresponding to the cell in the first cell set is the same as the PLMN of the first cell, and the PLMN corresponding to the cell in the second cell set is different from the PLMN of the first cell.

19. The method according to any one of claims 10 to 15, wherein the sending second information to the terminal comprises: sending the second information to the terminal by using a first path, wherein a cell corresponding to the first path is a first cell; a first handover manner is a handover manner based on cell handover, the second handover manner is a handover manner based on dual connectivity, the first set is a first PLMN set, the second set is a second PLMN set, the PLMN included in the PLMN in the first PLMN set includes the PLMN of the first cell, and the PLMN in the second PLMN set does not include the PLMN of the first cell.

20. A communication method, **characterized in that** the method includes:
determining permission information, wherein the permission information indicates that a terminal is allowed to perform multiple handover modes, and the multiple handover modes include a first handover mode and a second handover mode; or, the permission information indicates that the terminal is allowed to perform the second handover mode;
sending the permission information.

21. The method according to claim 20, **characterized in that** before the determining permission information, the method further includes:
receiving first information, wherein the first information indicates that the terminal supports multiple handover modes, and the multiple handover modes include a first handover mode and the second handover mode.

22. The method according to claim 20 or 21, wherein the license information comprises at least one of the following information:
Seventh information, indicating that the access network device does not perform the first handover mode;
Eighth information, indicating that the access network device performs the second handover mode;
A first set of public land mobile networks (PLMNs), wherein the PLMNs in the first PLMN set are not equivalent to the PLMN of the first cell, wherein the first cell is a cell corresponding to the first path, and the first path includes a connection between the terminal and the access network device;
Seventh information, indicating that the priority of the first handover mode is lower than the priority of the second handover mode.

23. The method according to any one of claims 20 to 22, wherein the grant information comprises a first set and/or a second set, the first set indicates a PLMN supporting the first handover manner, and the second set indicates a PLMN supporting the second handover manner.

24. The method according to claim 23, wherein the first handover manner is a cell handover based handover manner, the second handover manner is a dual connectivity based handover manner, the first set is a first PLMN set, and the second set is a second PLMN set; and a PLMN in the first PLMN set is equivalent to a PLMN of a first cell, a PLMN in the second PLMN set is not equivalent to a PLMN of the first cell, and the first cell is a cell corresponding to a first path; and the first path comprises a connection between the terminal and an access network device.

25. The method according to claim 23, wherein the first handover manner is a cell handover based handover manner, the second handover manner is a dual connectivity based handover manner, the first set is a first PLMN set, and the second set is a second PLMN set; and a PLMN in the first PLMN set comprises a PLMN of a first cell, a PLMN in the second PLMN set does not comprise the PLMN of the first cell, the first cell is a cell corresponding to a first path, and the first path comprises a connection between the terminal and an access network device.

26. The method according to any one of claims 20 to 25, wherein the method further comprises:
receiving eighth information, wherein the eighth information indicates that the handover mode configuration of the terminal has been updated.

27. A communications apparatus, comprising: a module configured to perform the method according to any one of claims 1 to 9, or a module configured to perform the method according to any one of claims 10 to 19, or a module configured to perform the method according to any one of claims 20 to 26.

28. A communications apparatus, comprising: a processor and an interface circuit, wherein the interface circuit is configured to receive a signal from another communications apparatus and transmit the signal to the processor, or send a signal from the processor to another communications apparatus; and the processor is configured to implement the method according to any one of claims 1 to 9 by using a logic circuit or executing code instructions, or implement the method according to any one of claims 10 to 19 by using a logic circuit or executing code instructions, or implement the method according to any one of claims 20 to 26 by using a logic circuit or executing code instructions.

29. A computer-readable storage medium, **characterized in that** the computer-readable storage medium stores a computer program or instructions, and when the computer program or instructions are executed by a communications apparatus, the method according to any one of claims 1 to 9 is implemented, or the method according to any one of claims 10 to 19 is implemented, or the method according to any one of claims 20 to 26 is implemented.
